# EUROPEAN PATENT APPLICATION

(11) **EP 4 746 467 A1**
(43) Date of publication of application: **20.05.2026**
(21) Application number: 23945374.9
(22) Date of filing: 14.07.2023
(51) Int. Cl.: H04W 8/24

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN)
(74) Representative: Penza, Giancarlo
(86) International application number: PCT/CN2023/107586
(87) International publication number: WO 2025/015477

(57) **Abstract**

The present application relates to communication methods and devices, and a computer-readable storage medium, a computer program product and a computer program. The communication method includes: a first terminal sending first information, the first information being used for requesting the allocation of a first context of the first terminal, and the first context of the first terminal being related to at least part of contexts of a second terminal.

## Description

### TECHNICAL FIELD

The present disclosure relates to the field of communications, and more particularly, to communication methods and devices, a computer-readable storage medium, a computer program product, and a computer program.

### BACKGROUND

With the development and popularization of electronic devices, there are many different types of terminals for users to use, and various types of terminals have their own advantages, and a same user may use different electronic devices on different occasions. However, how to make a same service switched between different terminals and achieve the effect of multi-terminal collaboration on different devices has become a problem that needs to be solved.

### SUMMARY

Embodiments of the present disclosure provide communication methods and devices, as well as a computer-readable storage medium, a computer program product and a computer program.

An embodiment of the present disclosure provides a communication method, including that:
a first terminal transmits first information, the first information being configured to request allocation of a first context of the first terminal, the first context of the first terminal being related to at least part of contexts of a second terminal.

An embodiment of the present disclosure provides a communication method, including that:
a first network device receives first information, the first information being configured to request allocation of a first context of a first terminal, the first context of the first terminal being related to at least part of contexts of a second terminal.

An embodiment of the present disclosure provides a communication method, including that:
a second terminal transmits third indication information, the third indication information being configured to indicate that the second terminal has a first capability, and the first capability including at least one of: a capability to support or allow allocation of a context related to at least part of contexts of the second terminal to one or more other terminals, and a capability to support or allow allocation of a context related to at least part of contexts of one or more other terminals to the second terminal.

An embodiment of the present disclosure provides a communication method, including that:
a second network device receives third indication information, the third indication information being configured to indicate that a second terminal has a first capability, and the first capability including at least one of: a capability to support or allow allocation of a context related to at least part of contexts of the second terminal to one or more other terminals, and a capability to support or allow allocation of a context related to at least part of contexts of one or more other terminals to the second terminal.

An embodiment of the present disclosure provides a first terminal, including:
a first communication unit configured to transmit first information, the first information being configured to request allocation of a first context of the first terminal, the first context of the first terminal being related to at least part of contexts of a second terminal.

An embodiment of the present disclosure provides a first network, including:
a second communication unit, configured to receive first information, the first information being configured to request allocation of a first context of a first terminal, the first context of the first terminal being related to at least part of contexts of a second terminal.

An embodiment of the present disclosure provides a second terminal, including:
a third communication unit configured to transmit third indication information, the third indication information being configured to indicate that the second terminal has a first capability, and the first capability including at least one of: a capability to support or allow allocation of a context related to at least part of contexts of the second terminal to one or more other terminals, and a capability to support or allow allocation of a context related to at least part of contexts of one or more other terminals to the second terminal.

An embodiment of the present disclosure provides a second network device, including:
a fourth communication unit configured to receive third indication information, the third indication information being configured to indicate that a second terminal has a first capability, and the first capability including at least one of: a capability to support or allow allocation of a context related to at least part of contexts of the second terminal to one or more other terminals, and a capability to support or allow allocation of a context related to at least part of contexts of one or more other terminals to the second terminal.

An embodiment of the present disclosure provides a first terminal, including a transceiver, a processor, and a memory. The memory is configured to store a computer program, the transceiver is configured to communicate with other devices, and the processor is configured to call and run the computer program stored in the memory to cause the first terminal to perform the above-described method.

An embodiment of the present disclosure provides a first network device, including a transceiver, a processor, and a memory. The memory is configured to store a computer program, the transceiver is configured to communicate with other devices, and the processor is configured to call and run the computer program stored in the memory to cause the first network device to perform the method described above.

An embodiment of the present disclosure provides a second terminal, including a transceiver, a processor, and a memory. The memory is configured to store a computer program, the transceiver is configured to communicate with other devices, and the processor is configured to call and run the computer program stored in the memory to cause the second terminal to perform the above-described method.

An embodiment of the present disclosure provides a second network device, including a transceiver, a processor, and a memory. The memory is configured to store a computer program, the transceiver is configured to communicate with other devices, and the processor is configured to call and run the computer program stored in the memory to cause the second network device to perform the method described above.

An embodiment of the present disclosure provides a chip for implementing the above methods. Specifically, the chip includes a processor for calling and running a computer program from a memory to cause a device on which the chip is mounted to perform the above-described method.

An embodiment of the present disclosure provides a computer-readable storage medium for storing a computer program that causes the device to execute the above-described methods when the computer program is executed by a device.

An embodiment of the present disclosure provides a computer program product including computer program indications that cause a computer to perform the methods described above.

An embodiment of the present disclosure provides a computer program that, when run on a computer, causes the computer to perform the above-described methods.

By adopting the scheme provided by the present embodiment, the first terminal may request allocation of a context related to at least part of contexts of the second terminal by transmitting the first information. In this way, by allocation of the contexts related to the second terminal to the first terminal, it enables the migration of at least part of the services of the second terminal to different devices, thereby achieving the effect of collaborating on a same service across multiple devices, while ensuring service continuity during the service migration.

### BRIEF DESCRIPTION OF THE DRAWINGS

FIG. 1 is a schematic diagram of an application scenario according to an embodiment of the present disclosure.
FIG. 2 is a schematic diagram of a 5GC-based system.
FIG. 3 is a schematic diagram of a QoS mechanism in a network architecture of a related protocol.
FIG. 4 is a schematic diagram of a scene in which a same user uses different electronic devices on different occasions.
FIG. 5 is a schematic flow chart of a communication method according to an embodiment of the present disclosure.
FIG. 6 is a schematic flow chart of a communication method according to another embodiment of the present disclosure.
FIG. 7 is a schematic flow chart of a communication method according to another embodiment of the present disclosure.
FIG. 8 is a schematic flowchart of a communication method according to another embodiment of the present disclosure.
FIG. 9 is a schematic diagram of a scenario of context allocation according to an embodiment of the present disclosure.
FIGS. 10 to 13 are various exemplary flowcharts of processing flows of the communication methods according to the embodiment of the present disclosure.
FIG. 14 is a schematic block diagram of a first terminal according to an embodiment of the present disclosure.
FIG. 15 is a schematic block diagram of a first network device according to an embodiment of the present disclosure.
FIG. 16 is a schematic block diagram of a second terminal according to an embodiment of the present disclosure.
FIG. 17 is a schematic block diagram of a second network device according to an embodiment of the present disclosure.
FIG. 18 is a schematic block diagram of a communication device according to an embodiment of the present disclosure.
FIG. 19 is a schematic block diagram of a chip according to an embodiment of the present disclosure.
FIG. 20 is a schematic block diagram of a communication system according to an embodiment of the present disclosure.

### DETAILED DESCRIPTION

The technical solutions in the embodiments of the present disclosure will be described with reference to the drawings in the embodiments of the present disclosure.

The technical solutions of the embodiments of the present disclosure can be applied to various communication systems, such as: a Long Term Evolution (LTE) system, an Advanced long term evolution (LTE-A) system, a New Radio (NR) system, an evolution system of an NR system, an LTE-based access to unlicensed spectrum (LTE-U) system, and an NR-based access to unlicensed spectrum (NR-U) system, a Non-Terrestrial Networks (NTN) system, a Universal Mobile Telecommunication System (UMTS), Wireless Local Area Networks (WLAN), Wireless Fidelity (WiFi), Fifth-Generation (5G) systems or other communication systems, etc.

Generally speaking, a conventional communication system supports a limited number of connections and is easy to implement, however, with the development of communication technology, mobile communication systems will support not only conventional communication, but also, for example, device-to-device (D2D) communication, machine-to-machine (M2M) communication, Machine Type Communication (MTC), vehicle-to-vehicle (V2V) communication, or vehicle-to-everything (V2X) communication, etc., and the embodiments of the present disclosure can also be applied to these communication systems. In a possible implementation, the communication system in the embodiments of the present disclosure may be applied to a Carrier Aggregation (CA) scenario, a Dual Connectivity (DC) scenario, or a Standalone (SA) network layout scenario. In a possible implementation, the communication system in the embodiments of the present disclosure may be applied to an unlicensed spectrum which may also be considered as a shared spectrum; alternatively, the communication system in the embodiments of the present disclosure may also be applied to a licensed spectrum which may also be regarded as a non-shared spectrum.

Embodiments of the present disclosure describe various embodiments in conjunction with a network device and a terminal device. The terminal device may also be referred to as a User Equipment (UE), an access terminal, a user unit, a user station, a mobile station, a remote station, a remote terminal, a mobile device, a user terminal, a terminal, a wireless communication device, a user agent or a user device, and the like. The terminal device may be a station (STAION, ST) in WLAN, may be a cellular phone, a cordless phone, a Session Initiation Protocol (SIP) phone, a Wireless Local Loop (WLL) station, a Personal Digital Assistant (PDA) device, a handheld device with wireless communication capabilities, a computing device or other processing device connected to a wireless modem, an in-vehicle device, a wearable device, a terminal device in a next generation communication system such as an NR network, or a future evolved Public Land Mobile Network (PLMN) network, or the like. In the embodiments of the present disclosure, the terminal device may be deployed on land, including indoor or outdoor, handheld, wearable, or vehicle-mounted; it can also be deployed on the water (such as ships, etc.); it can also be deployed in the air (e.g. on aircraft, balloons and satellites, etc.). In the embodiments of the present disclosure, the terminal device may be a Mobile Phone (Mobile Phone), a tablet (Pad), a computer with a wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like. As an example and not limitation, in the embodiments of the present disclosure, the terminal device may also be a wearable device. Wearable devices can also be called wearable smart devices, which are a general term for wearable devices which are daily wear intelligently designed and developed based on wearable technology, such as glasses, gloves, watches, clothing and shoes. A wearable device is a portable device that is worn directly on the body or integrated into the user's clothes or accessories. Wearable devices are not only hardware devices, but also realize powerful functions through software support, data interaction and cloud interaction. Generalized wearable smart devices include full functions, large size, and can realize complete or partial functions without relying on smart phones, for example, such wearable smart devices can be smart watches or smart glasses, and the wearable smart devices may only focus on a certain type of application function and need to be used in conjunction with other devices such as smart phones, for example, such wearable smart devices can be various types of smart bracelets and smart jewelry for physical sign monitoring.

In the embodiments of the present disclosure, the network device may be a device for communicating with a mobile device. The network device may be an Access Point (AP) in WLAN, a base station (BTS) in GSM or CDMA, a base station (NodeB, NB) in WCDMA, an evolutional Node B, eNB or eNodeB in LTE, a relay station or an Access Point, a vehicle-mounted device, a wearable device, a network device (gNB) in an NR network, a network device in a future evolution PLMN network, or a network device in an NTN network, or the like. By way of example and not limitation, in the embodiments of the present disclosure, the network device may have mobile characteristics, for example, the network device may be a mobile device. Alternatively, the network device may be a satellite or a balloon station. For example, the satellite may be a low earth orbit (LEO) satellite, a medium earth orbit (MEO) satellite, a geostationary earth orbit (GEO) satellite, a High Elliptical Orbit (HEO) satellite, or the like. Optionally, the network device may be a base station provided in a land area, a water area, or the like. In the embodiments of the present disclosure, the network device may provide a service for a cell, and the terminal device may communicate with the network device through a transmission resource (for example, a frequency domain resource or a spectrum resource) used by the cell. The cell may be a cell corresponding to the network device (for example, a base station), and the cell may belong to a macro base station or a base station corresponding to a Small cell. The small cell may include a Metro cell, a Micro cell, a Pico cell, a Femto cell or the like. Such small cells are characterized with small coverage and low transmit power, and are suitable for providing data transmission services with high speed.

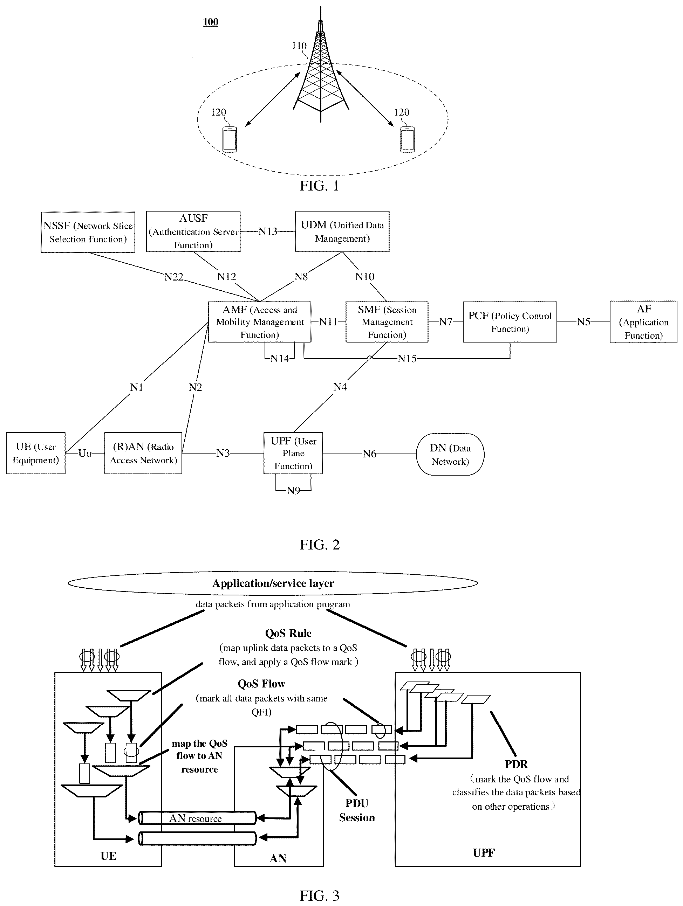

FIG. 1 exemplarily illustrates a communication system 100. The communication system includes a network device 110 and two terminal devices 120. In a possible implementation, the communication system 100 may include a plurality of network devices 110, and the coverage range of each network device 110 may include another number of terminal devices 120, which is not limited in the embodiments of the present disclosure. In a possible implementation, the communication system 100 may further include other network entities such as a Mobility Management Entity (MME), an Access and Mobility Management Function (AMF), and the like, which are not limited by the embodiments of the present disclosure. The network device may further include an access network device and a core network device. That is, the wireless communication system further includes a plurality of core networks for communicating with access network devices. The access network device may be an evolutional node B (eNB or e-NodeB), a macro base station, a micro base station (also referred to as a "small base station"), a pico base station, an access point (AP), a transmission point (TP) or a new generation Node B (gNodeB), or the like in a long-term evolution (LTE) system, a next generation (NR) system or an authorized auxiliary access long-term evolution (LAA-LTE) system. It should be understood that a device having a communication function in the network/system in the embodiments of the present disclosure may be referred to as a communication device. Taking the communication system illustrated in FIG. 1 as an example, the communication device may include a network device and a terminal device having a communication function, and the network device and the terminal device may be specific devices in the embodiments of the present disclosure, and will not be described herein. The communication device may also include other devices in the communication system, such as a network controller, a mobility management entity and other network entities, which are not limited in the embodiments of the present disclosure.

In order to facilitate understanding of the embodiments of the present disclosure, the following will briefly describe basic procedures and basic concepts related to the embodiments of the present disclosure. It should be understood that the basic procedures and basic concepts as described below do not limit the embodiments of the present disclosure.

An architecture diagram of a 5G network system is shown in FIG. 2, which includes: a Network Slice Selection Function (NSSF) which is mainly used for managing information related to network slices, such as selecting network slices for terminal devices; an Authentication Server Function (AUSF) which is used to complete the identity authentication function for user access; a Unified Data Management (UDM) which is used to manage and store contract data and authentication data; AMF (Access and Mobility Management Function) which is used to complete mobility management, security anchor point and security context management, etc, and in addition to mobility management for a user equipment (UE), which is also responsible for forwarding session management related messages between the UE and an SMF; a Session Management Function (SMF) which is used to complete session management, UE IP address allocation and management, etc.; a Policy Control Function (PCF) which is responsible for formulating policies related to mobility management, session management, billing, etc. for the UE; AF (Application Function) which is used for external application servers; a User Plane Function (UPF) which is used for complex user plane processing, such as forwarding traffic between the wireless access network and the Internet, reporting traffic usage, QoS (Quality of Service) policy implementation, etc.; a Data Network (DN) which is a 5GC external Data Network (such as the Internet, etc.). Data transmission is performed between nodes of a 5G core network (5G), between a UE and a 5GC node, between a UE and a Radio Access Network (RAN), and between a RAN and a 5GC node through corresponding interfaces, respectively. For example, as shown in FIG. 2, data transmission is performed between the AMF and the NSSF in the 5GC through an N22 interface; data transmission is performed between the AMF and the SMF through an N11 interface; data transmission is performed between the AMF and the AUSF through N12; data transmission between the AMF and the UDM is carried out through an N8 interface. Data transmission between the SMF and the UPF is carried out through an N4 interface. Data transmission between the UPF and an external data network is carried out through an N6 interface, and Data transmission between the UPF and an AN is carried out through an N3 interface. The UE performs access layer connection with the AN through a Uu port to exchange access layer messages and carry out wireless data transmission, and the UE performs non-access layer (NAS) connection with the AMF through an N1 port to exchange NAS messages. Data transmission is performed between the RAN and the AMF through an N2 interface, and data transmission is performed between the RAN and the UPF through an N3 interface. It should be understood that only some interfaces between nodes have been described above, and other interfaces between other 5GC nodes in FIG. 2 will not be repeatedly described.

When a UE implements a registration procedure and a PDU session establishment procedure, corresponding subscription information (such as access and mobility subscription, session management subscription, network slice subscription, etc.) of the UE may be retrieved from a UDM based on a SUPI, and a core network element such as an AMF and a SMF may generate a context for the UE based on subscription information and a local configuration policy. AM context and SM Context are the two most important contexts, which are generated by the AMF and the SMF respectively. The main contents include: UE context in AMF and session management context (SM context). It should be understood that contexts that may be generated for a same UE may include at least one of the two types described above, i.e., UE context in AMF and SM context.

As shown in Table 1 below, the main part of the UE context in AMF includes at least one of the following: access frequency-relevant information (e.g., the RFSP Index in Use in Table 1 may include access frequency-relevant information), paging-relevant information (which e.g., may include DRX-relevant information which may include at least one of UE-specific DRX Parameters, UE-specific DRX Parameters for NB-IoT, and Extended idle mode DRX Parameters in Table 1), mobility restriction information, location relevant information (such as TAI list and User location in Table 1), UE temporary identifier information (such as 5G-GUTI in Table 1), Access Management policy association information (a served PCF (such as a PCF ID in Table 1) and an established association (such as AM Policy Information in Table 1), UE policy association information, UE NWDAF association information, Allowed S-NSSAI information (such as Allowed NSSAI in Table 1, which is composed of one or more S-NSSAI), and parameters of each PDU session (such as S-NSSAI, DNN, SMF information, Network Slice Instance id, and Access Type in Table 1), or the like. It should be noted that the above is only an exemplary description of possible contents of the UE context in AMF, and actually, more fine-grained contents that may be included in the UE context in AMF can be referred to in Table 1, but details will not be described here.

**Table 1**

| Field | Description |
|---|---|
| SUPI | SUPI is the subscriber's permanent identity in 5GS. |
| Routing Indicator | UE's Routing Indicator that allows together with SUCI/SUPI Home Network Identifier to route network signalling to AUSF and UDM instances capable to serve the subscriber |
| AUSF Group ID | The AUSF Group ID for the given UE. |
| UDM Group ID | The UDM Group ID for the UE. |
| PCF Group ID | The PCF Group ID for the UE. |
| SUPI-unauthenticated-indicator | This indicates whether the SUPI is unauthenticated. |
| GPSI | The GPSI(s) of the UE. The presence is dictated by its storage in the UDM. |
| 5G-GUTI | 5G Globally Unique Temporary Identifier. |
| PEI | Mobile Equipment Identity |
| Internal Group ID-list | List of the subscribed internal group(s) that the UE belongs to. |
| UE Specific DRX Parameters | UE specific DRX parameters for E-UTRA and NR. |
| UE Specific DRX Parameters for NB-IoT | UE Specific DRX Parameters for NB-IoT |
| UE Mobility Management (MM) Network Capability | Indicates the UE MM network capabilities. |
| 5GMM Capability | Includes other UE capabilities related to 5GCN or interworking with EPS. |
| Events Subscription | List of the event subscriptions by other CP NFs. Indicating the events being subscribed as well as any information on how to send the corresponding notifications |
| LTE-M Indication | Indicates if the UE is a Category M UE. This is based on indication provided by the NG-RAN or by the MME at EPS to 5GS handover. |
| Management Object (MO) Exception Data Counter | MO Exception Data Counter used for Small Data Rate Control purposes. |
| AMF-Associated Expected UE Behaviour parameters | Indicates per UE the Expected UE Behaviour Parameters and their corresponding validity times as specified in clause 4.15.6.3. |
| For the Access Management (AM) Policy Association: | |
| AM Policy Information | Information on AM policy provided by PCF. Includes the Policy Control Request Triggers and the Policy Control Request message. Includes the authorized RFSP and the authorized Service Area Restrictions. |
| PCF ID | The identifier of the PCF for AM Policy. In roaming, the identifier of V-PCF (NOTE 2). |
| For the UE Policy Association: | |
| Trigger Information | The Policy Control Request Triggers on UE policy provided by PCF. |
| PCF ID(s) | The identifier of the PCF for UE Policy. In roaming, the identifiers of both V-PCF and H-PCF (NOTE 1) (NOTE 2). |
| For the UE Network Data Analytics Function (NWDAF) association: | |
| NWDAF ID(s) | Indicating the NWDAF ID(s) (instance ID(s) or Set ID(s)) used for the UE specific Analytics. |
| Subscription Correlation ID(s) | Active UE-related analytics subscription(s) for each given NWDAF ID. |
| Analytic ID(s) | Analytic ID(s) per NWDAF ID. |
| Analytics specific data | Additional information on the Analytics ID(s) the AMF is subscribed related to the UE specific Analytics, i.e. per Analytics ID it contains the following parameters: Analytics Filter Information, Target of Analytics reporting, Analytics Reporting Info. |
| Other information | |
| Subscribed RFSP Index | An index to specific RRM configuration in the NG-RAN that is received from the UDM. |
| RFSP Index in Use | An index to specific RRM configuration in the NG-RAN that is currently in use. |
| UserEquipment-Aggregate Maximum Bit Rate (UE-AMBR) in serving network | The UE-AMBR that has been sent to RAN (e.g. based on subscribed UE-AMBR from UDM or UE-AMBR received from PCF) |
| List of UE-Slice-MBR(s)(Maximum Bit Rate) | The list of UE-Slice-MBR if applicable. There is a single uplink and a single downlink value per S-NSSAI. |
| MICO Mode Indication | Indicates the MICO Mode for the UE. |
| Extended idle mode DRX Parameters | Negotiated extended idle mode DRX parameters. |
| Active Time Value for MICO mode | UE specific Active Time value allocated by AMF for MICO mode handling. |
| Strictly Periodic Registration Timer Indication | An indication that UE shall perform the Periodic Registration Update in a strictly periodic time, see clause 5.31.7.5 of TS 23.501 [2]. |
| Voice Support Match Indicator | An indication whether the UE radio capabilities are compatible with the network configuration. The AMF uses it as an input for setting the IMS voice over PS Session Supported Indication over 3GPP access. |
| Homogenous Support of IMS Voice over Packet Switched (PS) Sessions | Indicates per UE if "IMS Voice over PS Sessions" is homogeneously supported in all TAs in the serving AMF or homogeneously not supported, or, support is non-homogeneous/unknown, see clause 5.16.3.3 of TS 23.501 [2]. |
| UE Radio Capability for Paging Information | Information used by the NG-RAN to enhance the paging towards the UE |
| Information On Recommended Cells And RAN nodes For Paging | Information sent by the NG-RAN, and used by the AMF when paging the UE to help determining the NG-RAN nodes to be paged as well as to provide the information on recommended cells to each of these NG-RAN nodes, in order to optimize the probability of successful paging while minimizing the signalling load on the radio path. |
| UE Radio Capability Information | Information sent by the NG-RAN node and stored in the AMF. The AMF sends this information to the NG-RAN node within the UE context during transition to CM-CONNECTED state, other than NB-IoT when NB-IoT specific UE Radio Access Capability are sent instead. |
| UE Radio Capability ID | Pointer that uniquely identifies a set of UE Radio Capabilities in UCMF as defined in TS 23.501 [2]. |
| NB-IoT specific UE Radio Access Capability Information | NB-IoT specific UE radio access capabilities. |
| WUS Assistance Information | Assistance information for determining the WUS group (see TS 23.501 [2]). |
| Short Message Service Function (SMSF) Identifier | The Identifier of the SMSF serving the UE in RM-REGISTERED state. |
| SMSF Address | The Address of the SMSF serving the UE in RM-REGISTERED state. (see clause 4.13.3.1). |
| (Short Messaging Service (SMS) Subscription | Indicates subscription to any SMS delivery service over NAS irrespective of access type. |
| SEAF data | Master security information received from AUSF. |
| Last used EPS PLMN ID | The identifier of the last used EPS PLMN. |
| Paging Assistance Data for coverage enhancement (CE) capable UE | Paging Assistance Data for Enhanced Coverage level and cell ID provided by the last NG-RAN the UE was connected to. |
| Enhanced Coverage Restricted Information | Specifies per PLMN whether CE mode B is restricted for the UE, or both CE mode A and CE mode B are restricted for the UE, or both CE mode A and CE mode B are not restricted for the UE. |
| NB-IoT Enhanced Coverage Restricted Information | Specifies per PLMN whether the Enhanced Coverage is restricted or not for the UE. |
| Service Gap Time | Used to set the Service Gap timer for Service Gap Control (see clause 5.31.16 of TS 23.501 [2]). |
| Running Service Gap expiry time | The time of expiry of a currently running Service Gap Timer (see clause 5.31.16 of TS 23.501 [2]). |
| NB-IoT UE Priority | Numerical value used by the NG-RAN to prioritise between UEs accessing via NB-IoT. |
| List of Small Data Rate Control Statuses | List of Small Data Rate Control Statuses by DNN and S-NSSAI for the released PDU Sessions, see clause 5.31.14.3 of TS 23.501 [2]. |
| List of APN Rate Control Statuses | Indicates for each APN, the APN Rate Control Status (see clause 4.7.7.3 of TS 23.401 [13]) received from an MME when mobility from EPC to 5GC occurs. This information is provided to the MME during 5GC to EPC mobility. |
| UE positioning capability | Information sent by the LMF and stored in the AMF. The AMF sends this information along with the location request to the LMF. |
| For each access type level context within the UE access and mobility context: | |
| Access Type | Indicates the access type for this context. |
| Register Management (RM) State | Registration management state. |
| Registration Area | Current Registration Area (a set of tracking areas in TAI List). |
| TAI of last Registration | TAI of the TA in which the last Registration Request was initiated. |
| User Location Information | Information on user location. |
| Mobility Restrictions | Mobility Restrictions restrict mobility handling or service access of a UE. It consists of RAT restriction, Forbidden area, Service area restrictions and Core Network type restriction. It may also contain an Allowed CAG list and, optionally an indication whether the UE is only allowed to access 5GS via CAG cells. |
| Security Information for control plane (CP) | As defined in TS 33.501 [15]. |
| Security Information for User Plane (UP) | As defined in TS 33.501 [15]. |
| Allowed NSSAI | Allowed NSSAI consisting of one or more S-NSSAIs for serving PLMN in the present Registration Area. |
| Mapping Of Allowed NSSAI | Mapping Of Allowed NSSAI is the mapping of each S-NSSAI of the Allowed NSSAI to the S-NSSAIs of the Subscribed S-NSSAIs. |
| S-NSSAIs subject to Network Slice-Specific Authentication and Authorization | Subscribed S-NSSAIs which are subject to NSSAA procedure.Also including the status, i.e. result, of the NSSAA if already executed or whether the S-NSSAI is pending the completion of an NSSAA procedure. |
| Inclusion of NSSAI in RRC Connection Establishment Allowed by HPLMN | [Only for 3GPP access] it defines whether the UDM has indicated that the UE is allowed to include NSSAI in the RRC connection Establishment in clear text. |
| Access Stratum Connection Establishment NSSAI Inclusion Mode | Defines what NSSAI, if any, to include in the Access Stratum connection establishment as specified in clause 5.15.9 of TS 23.501 [2]. |
| CM state for UE connected via N3IWF/TNGF | Identifies the UE CM state (CM-IDLE, CM-CONNECTED) for UE connected via N3IWF/TNGF |
| N2 address information for N3IWF/TNGF | Identifies the N3IWF/TNGF to which UE is connected. Exists only if CM state for UE connected via N3IWF/TNGF is CM-CONNECTED. |
| AMF UE NGAP ID | Identifies the UE association over the NG interface within the AMF as defined in TS 38.413 [10]. This parameter exists only if CM state for the respective Access Type is CM-CONNECTED. |
| RAN UE next generation application protocol (NGAP) ID | Identifies the UE association over the NG interface within the NG-RAN node as defined in TS 38.413 [10]. This parameter exists only if CM state for the respective Access Type is CM-CONNECTED. |
| Network Slice Instance(s) | The Network Slice Instances selected by 5GC for this UE. |
| User equipment Reachability Request Parameter (URRP)-AMF information | UE Reachability Request Parameter contains a list of URRP-AMF flags and associated authorised NF IDs. Each URRP-AMF flag indicates whether direct UE reachability notification has been authorised by the HPLMN towards the associated NF ID or not. |
| steering of roaming (SoR) Update Indicator for Initial Registration | An indication whether the UDM requests the AMF to retrieve SoR information when the UE performs NAS Registration Type "Initial Registration". |
| SoR Update Indicator for Emergency Registration | An indication whether the UDM requests the AMF to retrieve SoR information when the UE performs NAS Registration Type "Emergency Registration". |
| Charging Characteristics | The Charging Characteristics as defined in Annex A of TS 32.256 [71]. |
| For each PDU Session level context: | |
| S-NSSAI(s) | The S-NSSAI(s) associated to the PDU Session. |
| DNN | The associated DNN for the PDU Session. |
| Network Slice Instance id | The network Slice Instance information for the PDU Session |
| PDU Session ID | The identifier of the PDU Session. |
| SMF Information | The associated SMF identifier and SMF address for the PDU Session. When an I-SMF is used, this additionally include the information correspond to an I-SMF. |
| Access Type | The current access type for this PDU Session (for a MA PDU Session this may correspond to information indicating 2 Access Type). |
| EBI-ARP list | The allocated EBI and associated ARP pairs for this PDU session. |
| 5GSM Core Network Capability | The UEs 5GSM Core Network Capability as defined in clause 5.4.4b of TS 23.501 [2]. |
| SMF derived CN assisted RAN parameters tuning | These are PDU Session specific parameters received from the SMF and used by the AMF to derive the Core Network assisted RAN parameters tuning. |
| NOTE 1: The AMF transfers the PCF ID to the SMF during PDU Session Establishment. The SMF may select the PCF identified by the PCF ID as described in clause 6.3.7.1 of TS 23.501 [2]. In HR roaming case, the AMF transfers the identifier of H-PCF as described in clause 4.3.2.2.2. In LBO roaming case, the AMF transfers the identifier of V-PCF as described in clause 4.3.2.2.1. | |
| NOTE 2: The PCF ID in AM Policy Association information and the PCF ID in UE Policy Association Information should be the same in non-roaming case. The V-PCF ID in AM Policy Association information and the V-PCF ID in UE Policy Association Information should be the same in roaming case. | |

The specific parameters of the session management context (SM context) are shown in Table 2 below, and the main part includes at least one of the following: UE identifier information (such as SUPI in Table 2), attribute parameters (such as S-NSSAI, DNN, PDU session identifier, etc. in Table 2) of the PDU session, information of interaction with application servers (such as DNAI, UE IP address in Table 2), QoS parameter information of each QoS data flow (such as 5QI, ARP, etc. in Table 2), data flow description (such as TFT) and binding information, EPS bearer mapping information, and so on. It should be pointed out that the above is only an exemplary description of some contents of the SM context. In fact, the more granular contents that may be included in the SM context can be shown in Table 2, but the details will not be repeated here.

**Table 2**

| Field | Description |
|---|---|
| SUPI | Subscription Permanent Identifier (SUPI) is the subscriber's permanent identity in 5GS. |
| Trace Requirements (does not apply to visited Session Management Function (V-SMF)) | Trace reference: Identifies a record or a collection of records for a particular trace. |
| | Trace type: Indicates the type of trace |
| | OMC identity: Identifies the OMC that shall receive the trace record(s). |
| S-NSSAI | The S-NSSAI of the PDU Session for the serving PLMN. |
| HPLMN S-NSSAI | The S-NSSAI of the PDU Session for the HPLMN (Home-Routed PDU Session) |
| Network Slice Instance id | The network Slice Instance information for the PDU Session |
| DNN | The associated DNN for the PDU Session. |
| AMF Information | The associated AMF instance identifier and GUAMI. |
| Access Type | The current access type for this PDU Session. |
| RAT Type | RAT Type for this PDU Session. |
| PDU Session ID | The identifier of the PDU Session. |
| H-SMF Information or SMF Information | The associated H-SMF identifier and H-SMF address for the HR PDU Session (applies only for a V-SMF), or the SMF identifier and SMF address for PDU Session (applies for I-SMF). |
| Context ID of the PDU Session in H-SMF or Context ID of the PDU Session in SMF | The context ID of the PDU Session in H-SMF or in SMF. |
| Forwarding Indication | An indication on whether forwarding tunnel needs be established in order to forward buffered DL data. |
| Uplink Tunnel Info of UPF controlled by the SMF /H-SMF | The Tunnel Information to be used to send UL traffic towards the UPF controlled by the SMF / H-SMF that interfaces the UPF controlled by the I-SMF. |
| Tunnel Info of NG-RAN | The N3 Tunnel Information in the NG-RAN for the PDU Session. This information is transferred if the target I/V-SMF indicates no NG-RAN change. |
| Application Function (AF) Coordination Information: | |
| Source data network access identifier (DNAI) | The DNAI from where the UE is moving. |
| UE Internet Protocol (IP) address in Source DNAI | The UE IP address in the Source DNAI. |
| For each notification correlation identity (ID): | |
| Uplink buffering indication | Uplink buffering indication as received from the AF for this notification correlation id during Early Notification. |
| For each Quality of Service (QoS ) Flow in the Packet Data Unit (PDU) | |
| 5G QoS Identifier (5QI) | Identifier for the authorized QoS parameters for the service data flow. |
| ARP | The Allocation and Retention Priority for the service data flow consisting of the priority level, the pre-emption capability and the pre-emption vulnerability |
| GFBR | Guaranteed Flow Bit Rate (GFBR) - UL and DL |
| MFBR | Maximum Flow Bit Rate (MFBR) - UL and DL |
| Priority Level | Indicates a priority in scheduling resources among QoS Flows. |
| Averaging Window | Represents the duration over which the guaranteed and maximum bitrate shall be calculated. |
| Maximum Data Burst Volume | Denotes the largest amount of data that is required to be transferred within a period of 5G-access network (AN) PDB. |
| Reflective QoS Control | Indicates to apply reflective QoS for the service data flow (SDF) in the traffic flow template (TFT). |
| QoS Notification Control (QNC) | Indicates whether notifications are requested from 3GPP RAN when the GFBR can no longer (or can again) be guaranteed for a QoS Flow during the lifetime of the QoS Flow. |
| Maximum Packet Loss Rate | Maximum Packet Loss Rate - UL and DL. |
| Mapped EPS Bearer Context for Each QoS Flow identifier (QFI) to support interworking with EPS(Evolved Packet System,EPS): | |
| EPS Bearer Id | An EPS bearer identity uniquely identifies an EPS bearer for one UE accessing via E-UTRAN |
| Mapped EPS Bearer QoS | Allocation and retention priority (ARP), Guaranteed Bit Rate (GBR), Maximum bit rate (MBR), Quality Class Indicator (QCI)) |
| Packet Data Network Gateway - User Plan (PGW-U) tunnel Information | PGW-U S5/S8 GPRS Tunnelling Protocol for the user plane (GTP-U) tunnel IP address and TEID information. General Packet Radio Service (GPRS) |
| Traffic Flow Template (TFT) | Traffic Flow Template |

The QoS mechanism in the network architecture of the related protocol is that a core network element (SMF) determines a PCC rule based on policy information, subscription information, and a local configuration, and generates a QoS Rule, a Packet Detection Rule (PDR), and a QoS parameter based on the PCC rule. The QoS Rule is used on a UE side to bind an uplink service data flow with a QoS flow (flow), the PDR is used on a UPF side to bind a downlink service data flow with a QoS flow, and the QoS parameter is used to generate parameters used by each QoS flow. The QoS parameters may be sent to the RAN side to generate a DRB corresponding to the QoS flow, ensuring the end-to-end (the air interface and the core network side) transmission quality. Referring to FIG. 3, in uplink transmission, a UE receives data packets from an application program, maps the uplink data packets to a QoS flow based on a QoS rule and applies a QoS flow mark, and then the UE marks all data packets of the QoS flow with the same QFI, maps the QoS flow to an AN resource, and sends it to an AN. An RAN (i.e., the AN shown in FIG. 3) converts the QoS flow mapped to the AN resource (i.e., the AN resource corresponding to each QoS flow generated by the AN based on the QoS parameter) into a PDU session and transmits it to a UPF. In downlink transmission, the PDF side receives data packets from the application program, marks the QoS flow based on the PDR and classifies the data packets based on other operations, marks all data packets of the QoS flow with the same QFI, combines the QoS flow into a PDU Session, transmits the PDU Session to the RAN (i.e., the AN shown in FIG. 3), and the RAN side transmits the received Protocol Data Unit (PDU) Session to the UE side through the AN resource.

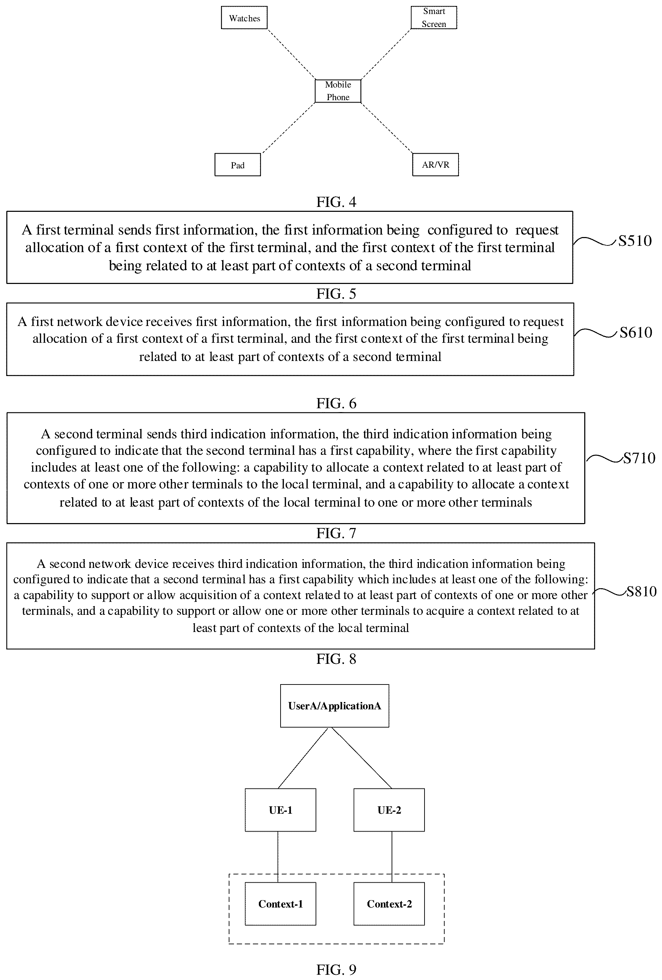

With the development and popularization of electronic devices, there are many different types of terminals for users, and various types of terminals have their own advantages. For example, as shown in FIG. 4, users may have multiple electronic devices at the same time, but different electronic devices may have different advantages and disadvantages. For example, in Figure 4, a mobile phone may be a device that users often use, which has advantages of convenient input, powerful computing capability, rich functions (including communication, multimedia, positioning, etc.), extremely high user stickiness, mass storage, and high privacy, as well as disadvantages of small screen, high weight and large volume, and heavy work load; a smart screen has the advantages of high-definition resolution, large screen, fixed position, remote control interaction, public equipment, etc, and has the disadvantages that it cannot be moved, interaction is inconvenient, and privacy is insufficient; watches have the advantages of convenience, wearability, portability, small screen, good touch, physiological data detection, and private devices, and have the disadvantage that they are not suitable for complex interactions and complex content; a tablet computer has the advantages of good touch effect and large screen size, but has the disadvantages of large volume and high weight, which makes it difficult to carry around; AR/VR has the advantages of good display effect and high privacy, but has the disadvantages of low computing power and unstable wearing comfort. A single user may use different electronic devices in different scenarios. However, how to enable free switching of the same service across different terminals, and how to achieve multi-terminal collaboration for specific users and/or specific services across different devices based on scenario requirements-while meeting the requirements of supporting communication, computing, and service continuity-to thereby provide the optimal service experience has become a problem that needs to be solved.

It should be understood that the terms "system" and "network" are often used interchangeably in the present disclosure. The term "and/or" is merely a description of the relationship between associated objects, indicating that three types of relationships may exist. For example, "A and/or B" may represent the following three scenarios: A exists alone, A and B exist together, or B exists alone. Additionally, the character "/" generally indicates that the objects before and after it is in an 'or' relationship. It should be understood that the term "indicate" as mentioned in the embodiments can refer to direct indication, indirect indication, or an indication of an associative relationship. For example, "A indicates B" can mean that A directly indicates B, such as B being acquirable through A; it can also mean that A indirectly indicates B, such as A indicating C, and B being acquirable through C; or it can mean that A and B has an associative relationship. In the description of the embodiments, the term "correspond" can indicate a direct or indirect correspondence relationship between the two, or it can indicate an associative relationship between the two, or it can be an indicating-and-being-indicated, configuring-and-being-configured, etc., relationship.

To facilitate understanding of the technical solutions of the embodiments of the present disclosure, the following describes the related technologies of the embodiments of the present disclosure. The following related technologies may be combined with the technical solutions of the embodiments of the present disclosure as optional solutions, and all of them shall fall within the scope of protection of the embodiments of the present disclosure.

FIG 5 is a schematic flowchart of a communication method according to an embodiment of the present disclosure. The method includes at least part of the following contents.

In operation S510, a first terminal sends first information, the first information being configured to request allocation of a first context of the first terminal, and the first context of the first terminal being related to at least part of contexts of the second terminal.

FIG 6 is a schematic flowchart of a communication method according to another embodiment of the present disclosure. The method includes at least part of the following content.

In operation S610, a first network device receives first information, the first information being configured to request allocation of a first context of a first terminal, and the first context of the first terminal being related to at least part of contexts of a second terminal.

FIG 7 is a schematic flowchart of a communication method according to an embodiment of the present disclosure. The method includes at least part of the following steps.

In operation S710, a second terminal sends third indication information, the third indication information being configured to indicate that the second terminal has a first capability, where the first capability includes at least one of the following: a capability to allocate a context related to at least part of contexts of one or more other terminals to the local terminal, and a capability to allocate a context related to at least part of contexts of the local terminal to one or more other terminals. Here, the local terminal may be the second terminal.

FIG 8 is a schematic flowchart of a communication method according to another embodiment of the present disclosure. The method includes at least part of the following.

In operation S810, a second network device receives third indication information, the third indication information being configured to indicate that a second terminal has a first capability which includes at least one of the following: a capability to support or allow acquisition of a context related to at least part of contexts of one or more other terminals, and a capability to support or allow one or more other terminals to acquire a context related to at least part of contexts of the local terminal. Here, the local terminal may be the second terminal.

Here, the first network device may be any device serving the first terminal. In an embodiment, the first network device may be a first access network device serving the first terminal. In an embodiment, the first network device may be a first core network device serving the first terminal, e.g., the first network device may be a first Access and Mobility Management Function (AMF) or a first Session Management Function (SMF). It should be understood that the first network device is not limited to the core network elements listed above. Not all possible elements of the first network device are enumerated here.

The second network device may be any device serving the second terminal. In an embodiment, the second network device may be a second access network device serving the second terminal. In an embodiment, the second network device may be a second core network device serving the second terminal, for example, the second network device may be a second AMF or a second SMF. It should be understood that the above is merely an exemplary explanation, and in actual processing, the second network device is not limited to the network elements of the core network listed above, and all possible network elements of the second network device are not enumerated here.

The first terminal and the second terminal may be 3GPP terminals, that is, terminals that can access a 3GPP network to perform data transmission and reception, and the present embodiment does not make enumerated listing and limitation on various possible types of the first terminal and the second terminal.

In some embodiments, the network devices serving the first terminal and serving the second terminal are the same, i.e., the first network device and the second network device may be the same, such embodiments may not distinguish between the first network device and the second network device, for example, the first network device may serve the first terminal and the second terminal. In some embodiments, the network devices serving the first terminal and the second terminal are different, that is, the first network device and the second network device are different.

In some possible embodiments, the network side (for example, a first network device serving the first terminal and the second terminal, or a second network device serving the second terminal) has allocated contexts related to the second terminal, and the present embodiment describes the related processing of the first terminal in this state.

Transmitting the first information by the first terminal may specifically include: transmitting the first information by the first terminal to the first network device. Accordingly, the step of receiving the first information by the first network device may specifically include: receiving the first information by the first network device from the first terminal.

The first information may be carried by at least one of: a registration request message, a registration update message, a session establishment request message, and a session modification request message. It should be understood that any one of the registration request message, the registration update message, the session establishment request message, and the session modification request message carries the first information, and may also carry the contents of the registration request message, the registration update message, the session establishment request message, and the session modification request message that are originally required to be carried according to the protocol, and this embodiment is not enumerated or restrictive thereof. For example, if the registration request message carries the first information, the registration request message may carry other information specified in the relevant protocol in addition to the first information, for example, the registration request message may further carry at least one of the following: a UE ID (such as an IMSI or a SUPI), network slice identifier (such as Single Network Slice Selection Assistance information (S-NSSAI)) and so on. In this embodiment, various types of information and functions that may be carried by the registration request message stipulated in the protocol are not enumerated. The description of the other messages is similar to that of the registration request message, and will not be described in detail.

The first information may specifically include a first request message which is used for requesting allocation of a first context of the first terminal; and more specifically, the first request message may be used to request the first network device to allocate the first context of the first terminal.

After the first network device receives the first information, the method further includes that: the first network device acquires contexts related to the second terminal; and the first network device generates a context of the first terminal based on the contexts related to the second terminal.

Optionally, acquiring the contexts related to the second terminal by the first network device may include that: the first network device acquires the contexts related to the second terminal stored locally. Here, the first network device serves the first terminal and the second terminal.

Optionally, acquiring the contexts related to the second terminal by the first network device may include one of followings: the first network device sends fourth information to the second network device and receives the contexts related to the second terminal from the second network device, the fourth information being configured to request to acquire the contexts related to the second terminal; and the first network device sends fifth information to a third network device and receives the contexts related to the second terminal from the third network device, the fifth information being configured to request acquisition of the contexts related to the second terminal. The first network device serves the first terminal; the second network device serves the second terminal; and the third network device is configured to store the contexts related to the second terminal. The fourth information includes a first identifier, and/or the fifth information includes a first identifier. The third network device includes at least one of a Unified Data Management function (UDM) and a Unified Data Repository function (UDR).

In some possible embodiments, the contexts related to the second terminal include at least one of the following: a context corresponding to the second terminal; a context corresponding to a first service run by the second terminal; a context corresponding to a first user using the second terminal; a context corresponding to a first Protocol Data Unit (PDU) session of the second terminal; and a context corresponding to a first Quality of Service (QoS) flow of the second terminal.

In some possible embodiments, the first information includes a first identifier, i.e. the first information includes a first identifier and a first request message. The first identifier includes at least one of: an identifier of the second terminal, an identifier of a first service, an identifier of a first user, an identifier of a first PDU session, and an identifier of a first QoS flow.

In some embodiments, the first identifier includes only an identifier of the second terminal.

The identifier of the second terminal may include, but is not limited to, at least one of the following: a Subscription Permanent Identifier (SUPI) of the second terminal, a Subscription Concealed Identifier (SUCI) of the second terminal, a Permanent Equipment Identifier (PEI) of the second terminal, a 5G Globally Unique Temporary Identifier of the second terminal, an Internal-Group Identifier (IGI) of the second terminal, a Generic Public Subscription Identifier (GPSI) of the second terminal, and the like. The SUPI is the world's unique 5G user permanent identifier, which should be allocated to each user in the 5G system and configured in UDM/UDR; the SUPI is only used internally in 3GPP systems; and the SUPI may contain: an International Mobile Subscriber Identity (IMSI), or an identifier for a specific network, which may be used for a private network. The SUCI is a privacy-preserving identifier containing the hidden SUPI. The format supported by the PEI parameter is International Mobile Station Equipment Identity (IMEI).

In this embodiment, the contexts related to the second terminal acquired by the first network device based on the identifier of the second terminal may refer to the context corresponding to the second terminal. The context corresponding to the second terminal may be part or all of the contexts corresponding to the second terminal, and further, the context corresponding to the second terminal may be a context that can be allocated to other terminals among all the contexts of the second terminal.

In an example, the process of acquiring the contexts related to the second terminal by the first network device may include: acquiring the context corresponding to the second terminal stored locally in a case that the first network device determines based on the identifier of the second terminal that the context corresponding to the second terminal is stored locally.

In an example, the process of acquiring the contexts related to the second terminal by the first network device may include that: in a case that the first network device determines based on the identifier of the second terminal that the context corresponding to the second terminal is not locally stored, the first network device transmits fourth information to the second network device and receives the context corresponding to the second terminal from the second network device. The fourth information may include the identifier of the second terminal.

Accordingly, the processing of the second network device may include locally acquiring the context corresponding to the second terminal based on the identifier of the second terminal in the fourth information, and feeding back the context corresponding to the second terminal to the first network device.

The manner in which the first network device determines the second network device may be to determine the second network device corresponding to the second terminal based on the identifier of the second terminal, and the specific manner of determining the second network device is not limited in the present embodiment.

In an example, the process of acquiring the contexts related to the second terminal by the first network device may include that: in a case that the first network device determines based on the identifier of the second terminal that the context corresponding to the second terminal is not locally stored, the first network device transmits fifth information to the third network device and receives the context corresponding to the second terminal from the third network device. The fifth information may include the identifier of the second terminal.

Accordingly, the processing of the third network device may include that: the third network device locally acquires the context corresponding to the second terminal based on the identifier of the second terminal in the fifth information, and feeds back the context corresponding to the second terminal to the first network device; alternatively, the third network device determines the second network device corresponding to the second terminal based on the identifier of the second terminal in the fifth information, acquires the context corresponding to the second terminal from the second network device, and feeds back the context corresponding to the second terminal to the first network device.

In some embodiments, the first identifier includes only an identifier of the first service.

The identifier of the first service may include at least one of the following: a name of the first service, an ID of the first service, a serial number of the first service, and the like. It should be understood that the identifier of the first service may also be replaced with an identifier of a first application, which may include, for example, a name of the first application, an ID of the first application, a serial number of the first application, and the like.

In the present embodiment, the contexts related to the second terminal acquired by the first network device based on the identifier of the first service may refer to the context corresponding to the first service run by the second terminal, that is, the context corresponding to the first service included in the contexts corresponding to the second terminal. Alternatively, the contexts related to the second terminal acquired by the first network device based on the identifier of the first application may refer to a context corresponding to the first application run by the second terminal, that is, a context corresponding to the first application included in the contexts corresponding to the second terminal. In the following embodiments, for the sake of simplicity, only the first service will be described as an example, and the related description of the first service in the following embodiments may be replaced with the first application, and the description will not be repeated.

In an example, the process of acquiring the contexts related to the second terminal by the first network device may include that: in a cases that the first network device determines based on the identifier of the first service that the context corresponding to the first service run by the second terminal is locally stored, the first network device acquires the locally stored context corresponding to the first service run by the second terminal.

The process of determining by the first network device based on the identifier of the first service whether or not the context corresponding to the first service run by the second terminal is locally stored may include that: the first network device determines based on the identifier of the first service whether or not there locally exists one or more other terminals that run the first service and have a binding relationship with the first terminal, and if such terminal(s) exist(s), one of the one or more other terminals that run the first service and have a binding relationship with the first terminal is determined as the second terminal, and it is determined that the context corresponding to the first service run by the second terminal is locally stored.

The one or more other terminals having a binding relationship with the first terminal may be stored in the first network device in advance, and the present embodiment does not limit the manner in which the first network device acquires or obtains the binding relationship between the first terminal and the one or more other terminals. Here, the binding relationship may alternatively be described as an association relationship, a correlation, or the like, and the present embodiment does not provide all possible descriptions of the binding relationship. It should be noted that the one or more other terminals refer to other terminals different from the first terminal.

One of the one or a plurality of other terminals that run the first service and have a binding relationship with the first terminal may be used as the second terminal in two cases. In one case, only one other terminal running the first service and having a binding relationship with the first terminal exists, and such other terminal is directly used as the second terminal. In another case, there are a plurality of other terminals running the first service and having a binding relationship with the first terminal, and in this case, another terminal satisfying a first preset condition may be selected as the second terminal from the plurality of other terminals. The first preset condition may include at least one of the following: contexts corresponding to a designated terminal and the first service being recently or newly generated. The designated terminal may be pre-configured or default, for example, the designated terminal may be a smartphone, or the designated terminal may be a notebook computer, etc. Not all possible types of designated terminals are enumerated here.

In an example, the process of acquiring the contexts related to the second terminal by the first network device may include that: in a case that the first network device determines, based on the identifier of the first service, that one or more other terminals running the first service and having a binding relationship with the first terminal does or do not exist locally, the first network device transmits fourth information to the second network device and receives the context corresponding to the first service run by the second terminal from the second network device. The fourth information may include an identifier of the first service. Further, the fourth information may further include an identifier of the first terminal.

Accordingly, the processing of the second network device may include: locally querying for one or more other terminals that run the first service and have a binding relationship with the first terminal based on the identifier of the first service in the fourth information, selecting one of the one or more other terminals that run the first service and have a binding relationship with the first terminal as the second terminal, extracting a context corresponding to the first service run by the second terminal from the context corresponding to the second terminal, and feeding back the context corresponding to the first service run by the second terminal to the first network device. In this example, the process in which the second network device uses one of the one or more other terminals that run the first service and have a binding relationship with the first terminal as the second terminal is similar to the description of the processing by the first network device in the foregoing example, and will not be described in detail.

In an example, the process of acquiring the contexts related to the second terminal by the first network device may include: in a case that the first network device determines, based on the identifier of the first service, that there are no locally one or more other terminals that run the first service and have a binding relationship with the first terminal, the first network device transmits fifth information to the third network device and receives the context corresponding to the first service run by the second terminal from the third network device. The fifth information may include the identifier of the first service. Further, the fifth information may further include the identifier of the first terminal.

The processing of the third network device may include that: the third network device locally queries for one or more other terminals that run the first service and have a binding relationship with the first terminal based on the identifier of the first service in the fifth information, selects one of the one or more other terminals that run the first service and have a binding relationship with the first terminal as a second terminal, extracts the context corresponding to the first service run by the second terminal from the context corresponding to the second terminal, and feeds back the context corresponding to the first service run by the second terminal to the first network device.

Alternatively, the processing of the third network device may include that: the third network device queries a plurality of candidate network devices for one or more other terminals running the first service and having a binding relationship with the first terminal based on the identifier of the first service in the fifth information, and when determining that the second network device among the plurality of candidate network devices stores a context that corresponds to the second terminal and satisfies the first preset condition, extracts the context corresponding to the first service run by the second terminal from the second network device based on the identifier of the first service, and feedback the context corresponding to the first service run by the first terminal to the first network device.

In an embodiment, the first identifier includes only an identifier of a first user.

The identifier of the first user includes at least one of: an ID of the first user and biometric information of the first user. The biometric information may include at least one of: fingerprints, facial features, voice features, and the like. The biometric information may refer to at least one of: specific feature information of a fingerprint, specific feature information of a face feature, and specific feature information of a voice feature; or the biometric information may refer to at least one of: a fingerprint ID, a face feature ID, a voice feature ID, and the like. In the present embodiment, the context related to the second terminal acquired by the first network device based on the identifier of the first user may refer to a context corresponding to the first user using the second terminal.

In an example, the process of acquiring the contexts related to the second terminal by the first network device may include that: in a case of determining that the context corresponding to the first user using the second terminal is locally stored based on the identifier of the first user, the first network device acquires the locally stored context corresponding to the first user using the second terminal.

The process of determining by the first network device based on the identifier of the first user whether or not a context corresponding to a first user using the second terminal is locally stored may include that: the first network device determines based on the identifier of the first user whether or not one or more other terminals used by the first user and having a binding relationship with the first terminal exist locally, and if such terminal(s) exist(s), the first network device determines one of the one or more other terminals used by the first user and having a binding relationship with the first terminal as the second terminal, and determines that the context corresponding to the first user using the second terminal is locally stored.

One of the one or more other terminals used by the first user and having a binding relationship with the first terminal may be used as the second terminal in two cases. In one case, only one other terminal used by the first user and having a binding relationship with the first terminal exists, and such other terminal may be directly used as the second terminal. In another case, there are a plurality of other terminals used by the first user and having a binding relationship with the first terminal, and in this case, another terminal satisfying a second preset condition may be selected as the second terminal from the plurality of other terminals. The second preset condition may include at least one of the following: contexts corresponding to a designated terminal and the first user being recently or newly generated. The description of the designated terminal is the same as that of the above-described embodiment, and the description thereof will not be repeated.

In an example, the process of acquiring the contexts related to the second terminal by the first network device may include that: in a case that the first network device determines based on the identifier of the first user that no terminals used by the first user and having a binding relationship with the first terminal locally exist, the first network device transmits fourth information to the second network device and receives the context corresponding to the first user using the second terminal from the second network device. The fourth information may include an identifier of the first user. Further, the fourth information may further include an identifier of the first terminal.

Correspondingly, the processing of the second network device may include: locally querying for one or more other terminals used by the first user and having a binding relationship with the first terminal based on the identifier of the first user in the fourth information, taking one of the one or more other terminals used by the first user and having a binding relationship with the first terminal as the second terminal, extracting a context corresponding to the first user using the second terminal from the context corresponding to the second terminal and transmitting the context corresponding to the first user using to the first network device. In this example, the process in which the second network device uses one of one or a plurality of other terminals used by the first user and having a binding relationship with the first terminal as the second terminal is similar to the description of the process of the first network device in the foregoing example, and the description thereof is omitted.

In an example, the process of acquiring the contexts related to the second terminal by the first network device may include that: in a case that the first network device determines, based on the identifier of the first user, that there is no local one or more other terminals used by the first user and having a binding relationship with the first terminal, the first network device transmits fifth information to the third network device and receives the context corresponding to the first user using the second terminal from the third network device. The fifth information may include the identifier of the first user. Further, the fifth information may further include the identifier of the first terminal.

The processing of the third network device may include: the third network device locally queries for one or more other terminals used by the first user and having a binding relationship with the first terminal based on the identifier of the first user in the fifth information, selects one of the one or more other terminals used by the first user and having a binding relationship with the first terminal as a second terminal, extracts a context corresponding to the first user using the second terminal from a context corresponding to the second terminal, and feeds back the context corresponding to the first user using the second terminal to the first network device.

Alternatively, the processing of the third network device may include that: the third network device queries for one or more other terminals used by the first user and having a binding relationship with the first terminal from among the plurality of candidate network devices based on the identifier of the first service in the fifth information, and when it is determined that the second network device among the plurality of candidate network devices stores a context that corresponds to the second terminal and satisfies the second preset condition, extracting a context corresponding to the first user using the second terminal from the second network device based on the identifier of the first service, and feeding back the context corresponding to the first service run by the second terminal to the first network device. The definition of the second preset condition is the same as that of the foregoing example, and the description thereof is omitted.

In some embodiments, the first identifier includes an identifier of the second terminal, and the first identifier further includes at least one of an identifier of a first service, an identifier of a first user, an identifier of a first PDU session, and an identifier of a first QoS flow.

Optionally, the first identifier may include an identifier of the second terminal and an identifier of the first service, and the contexts related to the second terminal include a context corresponding to the first service run by the second terminal. Optionally, the first identifier may include an identifier of the second terminal and an identifier of the first user, and the contexts related to the second terminal include a context corresponding to the first user using the second terminal. Optionally, the first identifier may include an identifier of the second terminal, an identifier of the first service, and an identifier of the first user, and the contexts related to the second terminal include a context corresponding to the first service which is run under the identifier of the first user using the second terminal. Optionally, the first identifier may include an identifier of the second terminal and an identifier of the first PDU session, that is, the first identifier is an identifier for indicating the first PDU session of the second terminal, and the contexts related to the second terminal include a context corresponding to the first PDU session of the second terminal. Optionally, the first identifier may include an identifier of the second terminal and an identifier of the first QoS flow, that is, the first identifier is an identifier for indicating the first QoS flow of the second terminal, and the contexts related to the second terminal include a context corresponding to the first QoS flow of the second terminal. Optionally, the first identifier may include an identifier of a second terminal, an identifier of a first PDU session, and an identifier of a first QoS flow, and the contexts related to the second terminal include a context corresponding to the first QoS flow in the first PDU session of the second terminal.

It should be understood that the above is merely an exemplary explanation, and different contexts related to the second terminal can be obtained based on different combinations of the contents of the first identifier in actual processing, and it is not enumerated here. As long as at least one of the first identifiers is included and at least one of the contexts related to the second terminal is correspondingly obtained, it is all within the scope of protection of the embodiments.

In an example, the process of acquiring the contexts related to the second terminal by the first network device may include that: in a case where the first network device determines based on the identifier of the second terminal included in the first identifiers that the context corresponding to the second terminal is locally stored, the first network device acquires the locally stored contexts related to the second terminal based on at least one of the identifier of the first service, the identifier of the first user, the identifier of the first PDU session, and the identifier of the first QoS flow included in the first identifiers. The specific content of the contexts related to the second terminal corresponding to the combination of different first identifiers is the same as that of the above-described example, and thus will not be repeatedly described.

In an example, the process of acquiring the contexts related to the second terminal by the first network device may include that: in a case that the first network device determines based on the identifier of the second terminal included in the first identifiers that the context corresponding to the second terminal is not locally stored, the first network device transmits fourth information to the second network device and receives the context corresponding to the second terminal from the second network device; the first network device acquires contexts related to the second terminal from the context corresponding to the second terminal based on at least one of the identifier of the first service, the identifier of the first user, the identifier of the first PDU session, and the identifier of the first QoS flow included in the first identifiers; the fourth information may include the identifier of the second terminal. Accordingly, the processing of the second network device may include locally acquiring a context corresponding to the second terminal based on the identifier of the second terminal in the fourth information, and feeding back the context corresponding to the second terminal to the first network device.

In an example, the process of acquiring the contexts related to the second terminal by the first network device may include that: in a case that the first network device determines based on the identifier of the second terminal included in the first identifiers that the context corresponding to the second terminal is not locally stored, the first network device transmits fourth information to the second network device and receives the contexts related to the second terminal from the second network device; the fourth information may include all contents of the first identifiers, for example, the first identifiers include the identifier of the second terminal, and the first identifier further includes at least one of the identifier of the first service, the identifier of the first user, the identifier of the first PDU session, and the identifier of the first QoS flow. Accordingly, the processing of the second network device may include: acquiring a locally stored context corresponding to the second terminal based on the identifier of the second terminal in the first identifiers, acquiring contexts related to the second terminal from the context corresponding to the second terminal based on at least one of the identifier of the first service, the identifier of the first user, the identifier of the first PDU session, and the identifier of the first QoS flow included in the first identifiers, and transmitting the contexts related to the second terminal to the first network device.

In an example, the process of acquiring the contexts related to the second terminal by the first network device may include that: in a case that the first network device determines based on the identifier of the second terminal included in the first identifiers that the context corresponding to the second terminal is not locally stored, the first network device transmits fifth information to the third network device and receives the contexts related to the second terminal from the third network device; the fifth information may include all contents of the first identifiers, for example, the first identifiers include the identifier of the second terminal, and the first identifier further includes at least one of the identifier of the first service, the identifier of the first user, the identifier of the first PDU session, and the identifier of the first QoS flow.

Accordingly, the processing of the third network device may include that: the third network device locally acquires a context corresponding to the second terminal based on the identifier of the second terminal in the fifth information, acquiring contexts related to the second terminal from the context corresponding to the second terminal based on at least one of the identifier of the first service, the identifier of the first user, the identifier of the first PDU session, and the identifier of the first QoS flow included in the first identifiers, and transmitting the contexts related to the second terminal to the first network device; alternatively, the third network device determines a second network device corresponding to the second terminal based on the identifier of the second terminal in the fifth information, acquires contexts related to the second terminal from the second network device based on at least one of the identifier of the first service, the identifier of the first user, the identifier of the first PDU session, and the identifier of the first QoS flow included in the first identifier, and transmits the contexts related to the second terminal to the first network device.

In various possible examples in which the first information includes the first request message and includes the first identifier, the contexts related to the second terminal may be acquired through the third network device; accordingly, before the first network device transmits the fifth information to the third network device, the first network device may further perform an operation of determining the third network device. For example, the first network device determines the third network device, which may mean that the first network device determines a corresponding third network device based on the first identifier. That is, there may be a plurality of network devices on the core network side, the first network device may select one of the one or more candidate network devices as the third network device, and the selected third network device may refer to any one of the one or more candidate network devices that can acquire or store context information corresponding to the first identifier.

In some possible embodiments, the first information includes only the first request message and excludes the first identifier. In the present embodiment, the contexts related to the second terminal may include a context corresponding to the second terminal.

It should be noted that if at least one of the identifier of the first service, the identifier of the first user, the identifier of the first PDU session, and the identifier of the first QoS flow is preconfigured or defaulted by the first network device, the contexts related to the second terminal may include at least one of the following: a context corresponding to the first service run by the second terminal; a context corresponding to the first user using the second terminal; a context corresponding to the first PDU session of the second terminal; and a context corresponding to the first QoS flow of the second terminal. For example, the first service may be a specified service configured by the first network device in advance, and the first network device may need by default to acquire a context corresponding to the specified service run by the second terminal, and not all possible situations are enumerated here.

Next, for convenience of illustration, the case that the contexts related to the second terminal include the context corresponding to the second terminal is taken as an example.

In an example, the process of acquiring the contexts related to the second terminal by the first network device may include: in a case that the first network device determines that the context corresponding to the second terminal is locally stored, the first network device acquires the locally stored contexts related to the second terminal.

In an example, the process of determining by the first network device whether the context corresponding to the second terminal is locally stored may include: determining whether one or more other terminals having a binding relationship with the first terminal are locally stored, and if such terminal(s) exist(s), determining one of the one or more other terminals having a binding relationship with the first terminal as the second terminal, and determining that the context corresponding to the second terminal is locally stored. Here, one of the one or a plurality of other terminals having a binding relationship with the first terminal may be regarded as the second terminal in two cases: in one case, only one other terminal having a binding relationship with the first terminal is regarded as the second terminal; in another case, if there are a plurality of other terminals in a binding relationship with the first terminal, another terminal that satisfies a third preset condition among the plurality of other terminals may be taken as the second terminal, and the third preset condition may include at least one of the following: a designated terminal whose context is recently or newly generated.

In an example, the process of acquiring the contexts related to the second terminal by the first network device may include that: in a case that the first network device determines that the context corresponding to the second terminal is not stored locally, the first network device transmits fourth information to the second network device and receives the context corresponding to the second terminal from the second network device; the fourth information may include a first request message, and may further include an identifier of the first terminal.

Accordingly, the processing of the second network device may include determining one or more other terminals having a binding relationship with the first terminal based on the fourth information, and using one of the one or more other terminals having a binding relationship with the first terminal as the second terminal, and transmitting a context corresponding to the second terminal to the first network device. Here, the process in which the second network device regards one of one or a plurality of other terminals having a binding relationship with the first terminal as the second terminal is the same as in the foregoing example, and the description thereof is omitted.

In an example, the process of acquiring the contexts related to the second terminal by the first network device may include that: in a case that the first network device determines that the context corresponding to the second terminal is not locally stored, the first network device transmits fifth information to the third network device, and receives the context corresponding to the second terminal from the third network device. The fifth information may include a first request message, and may further include an identifier of the first terminal.

Accordingly, the processing of the third network device may include that the third network device determines one or more other terminals having a binding relationship with the first terminal based on the fifth information, determines one of the one or more other terminals having a binding relationship with the first terminal as the second terminal, and transmits a context corresponding to the second terminal to the first network device. Alternatively, the processing of the third network device may include that the third network device determines one or more other terminals having a binding relationship with the first terminal based on the fifth information, determines one of the one or more other terminals having a binding relationship with the first terminal as a second terminal, determines a second network device corresponding to the second terminal, acquires a context corresponding to the second terminal from the second network device, and feeds back the context corresponding to the second terminal to the first network device.

The above is an exemplary description for example that the contexts related to the second terminal include the context corresponding to the second terminal. The difference between a case that the contexts related to the second terminal include other contexts with a finer granularity and a case that the contexts related to the second terminal include the context corresponding to the second terminal is that the first network device (or the second network device, or the third network device) needs to further extract a context with a corresponding granularity from the context corresponding to the second terminal based on at least one of the identifier of the first service, the identifier of the first user, the identifier of the first PDU, and the identifier of the first QoS flow when performing the processing of each example, and thus the description thereof is omitted.

For each embodiment in which the first network device acquires the contexts related to the second terminal, it should be further noted that if the first network device receives the contexts related to the second terminal from the second network device, the second network device may directly release or delete the contexts related to the second terminal, or the second network device may also maintain or save the contexts related to the second terminal. In a case that the first network device receives the contexts related to the second terminal from the third network device, the third network device may also directly delete the contexts related to the second terminal, or the third network device may also maintain or save the contexts related to the second terminal. In a case that the first network device receives the contexts related to the second terminal from the third network device, and the third network device extracts the contexts related to the second terminal from the second network device, the second network device or the third network device may further directly delete the contexts related to the second terminal, or the second network device or the third network device may also maintain or save the contexts related to the second terminal. The various possible embodiments of the second network device and the third network device are not enumerated and limited herein.

In some possible embodiments, the first context of the first terminal includes at least one of: a first part of parameters in the contexts related to the second terminal; related parameters of a second part of parameters in the contexts related to the second terminal.

The contexts related to the second terminal may include contexts related to the second terminal that can be allocated to one or more other terminals in addition to the second terminal. It should be noted that the contexts related to the second terminal that can be allocated to one or more other terminals other than the second terminal is not necessarily all the contexts of the second terminal, for example, in some possible cases, all the contexts of the second terminal may include other contexts of the second terminal in addition to the contexts related to the second terminal that can be allocated to one or more other terminals other than the second terminal, and said other contexts of the second terminal refer to contexts of the second terminal that cannot be allocated to one or more other terminals other than the second terminal.

Similarly, the first context of the first terminal includes a first part of parameters in the contexts related to the second terminal, and/or related parameters of the second part of parameters in the contexts related to the second terminal. In some possible cases, the whole contexts of the first terminal may include a context of the first terminal itself which is different from and/or unrelated to any context of the second terminal, in addition to the first part of parameters in the contexts related to the second terminal and/or the related parameters of the second part of parameters in the contexts related to the second terminal (i.e. the first context of the first terminal).

Here, the first terminal may be included in one or more other terminals other than the second terminal. It should be understood that regardless of the foregoing or the following, the reference to other terminals is a relative concept, that is, other terminals are relative to the first terminal or the second terminal. Any one of other terminals mentioned with respect to the first terminal is, for example, one or more other terminals that have a binding relationship with the first terminal mentioned in the above embodiments, and any one of other terminals refers to another terminal different from the first terminal, and in this case, said another terminal does not include the first terminal. Any other terminal mentioned with respect to the second terminal, for example, among one or a plurality of other terminals other than the second terminal, refers to any other terminal different from the second terminal, and in this case, the any other terminal is not the second terminal but may be the first terminal.

In an embodiment, the first context of the first terminal may include a first part of parameters in the contexts related to the second terminal. Accordingly, the step of generating the first context of the first terminal by the first network device based on the contexts related to the second terminal may include generating the first context of the first terminal by the first network device based on the first part of parameters in the contexts related to the second terminal. For example, the first network device may directly add the first part of the parameter in the contexts related to the second terminal to the first context of the first terminal.

The first part of parameters may be all or part of the parameters of the contexts related to the second terminal. Still further, the first part of parameters may be part or all of the parameters of the contexts related to the second terminal that can be allocated to one or more other terminals other than the second terminal among the contexts related to the second terminal.

In this embodiment, the first network device generates the first context of the first terminal based on the first part of parameters in the contexts related to the second terminal, which may include that: the first network device generates all contexts of the first terminal based on subscription information of the first terminal (for example, MM subscription information of the first terminal which may be obtained from the third network device), a local related configuration of the first network device, and the first part of parameters in the contexts related to the second terminal. All the contexts of the first terminal include a first context of the first terminal, and the first context of the first terminal includes the first part of parameters in the contexts corresponding to the second terminal. In addition, all the contexts of the first terminal may further include contexts of the first terminal itself. The specific generation method of the contexts of the first terminal itself is not limited in the present embodiment.

Optionally, after the first network device generates the first context of the first terminal, the first network device may release or delete the first part of parameters in the contexts related to the second terminal. In this case, if the first part of parameters is not all the parameters in the contexts related to the second terminal, the first network device may continue to maintain or save the remaining parameters in the contexts related to the second terminal other than the first part of parameters. If the first part of parameters is all parameters in the contexts related to the second terminal, the first network device directly releases or deletes the contexts related to the second terminal. That is, the first network device migrates the first part of the parameters in the contexts related to the second terminal to the first terminal.

Optionally, after the first network device generates the first context of the first terminal, the first network device may still maintain or save the contexts related to the second terminal.

In an embodiment, the first context of the first terminal may include a related parameter of a second part of parameters in the contexts related to the second terminal. Accordingly, the first network device generates a first context of the first terminal based on the contexts related to the second terminal, and may include: the first network device processes a second part of parameters in the contexts related to the second terminal to acquire a related parameter of the second part of parameters in the contexts related to the second terminal; and generates the first context of the first terminal based on the related parameter of the second part of parameters in the contexts related to the second terminal.

In this case, the second part of parameters may be all or part of the parameters of the contexts related to the second terminal. Still further, the second part of parameters may be part or all of the parameters of the contexts related to the second terminal that can be allocated to one or more other terminals other than the second terminal in the contexts related to the second terminal.

The first network device processes the second part of parameters in the contexts related to the second terminal to acquire the related parameter of the second part of parameters in the contexts related to the second terminal, and may include: the first network device adjusts the second part of parameters in the contexts related to the second terminal based on relevant information of the first terminal to acquire the related parameter of the second part of parameters in the contexts related to the second terminal. Here, there is a mapping or association relationship between the related parameter of the second part of parameters in the contexts related to the second terminal and the second part of parameters in the contexts related to the second terminal.

For example, the relevant information of the first terminal is different from the relevant information of the second terminal. For example, the relevant information of the first terminal may include at least one of: a bit rate supported by the first terminal, a resolution supported by the first terminal, a computing capability supported by the first terminal, a communication capability of the first terminal, a screen clarity of the first terminal, and the like. The relevant information of the first terminal may be acquired in advance by the first network device, and the manner in which the first network device acquires the relevant information of the first terminal is not limited here.

In the present embodiment, the first context of the first terminal is generated based on the related parameter of the second part of parameters in the contexts related to the second terminal, which may include that: the first network device generates all contexts of the first terminal in combination with the subscription information of the first terminal (for example, the MM subscription information of the first terminal, which may be obtained from the third network device), the local related configuration of the first network device, and the related parameter of the second part of parameters in the contexts related to the second terminal. All the contexts of the first terminal include a first context of the first terminal, and the first context of the first terminal includes the related parameters of the second part of parameters in the contexts corresponding to the second terminal. In addition, all the contexts of the first terminal may further include contexts of the first terminal itself.

In the present embodiment, the first network device can acquire the related parameter of the second part of parameters in the contexts related to the second terminal by adjusting the second part of parameters in the contexts related to the second terminal in combination with the relevant information of the first terminal, and then generate the first context of the first terminal based on the related parameter of the second part of parameters in the contexts related to the second terminal, so that the applicability or applicability level of the first context of the first terminal to the first terminal is higher.

Finally, the first context of the first terminal allocated by the first network device has a mapping or association relationship with the second part of parameters in the contexts related to the second terminal. For example, the first network device adjusts the second part of parameters in the contexts related to the second terminal according to the relevant information of the first terminal and a preset mapping relationship table (or association relationship table) to acquire the related parameter, applicable to the first terminal, of the second part of parameters in the contexts related to the second terminal; and the first network device then takes the related parameter of the second part of parameters in the contexts related to the second terminal as the first context of the first terminal.

The mapping relationship table and the association relationship table may be pre-configured or negotiated, to which this embodiment is not limited. In actual processing, as long as the relevant information of the first terminal is different from the relevant information of the second terminal, there may be a corresponding adjustment method, and as long as the related parameter of the second part of the parameters in the contexts related to the second terminal after adjustment is applicable to the first terminal, it shall fall within the protection scope of the present embodiment. It is not enumerated here.

Optionally, after the first network device generates the first context of the first terminal, the first network device may release or delete a second part of parameters in the contexts related to the second terminal. In this case, if the second part of parameters is not all the parameters in the contexts related to the second terminal, the first network device may continue to maintain or save the remaining parameters in the contexts related to the second terminal other than the second part of parameters. If the second part of parameters is all the parameters in the contexts related to the second terminal, the first network device directly releases or deletes the contexts related to the second terminal. Optionally, after the first network device generates the first context of the first terminal, the first network device may still maintain or save the contexts related to the second terminal.

In an embodiment, the first context of the first terminal may include a first part of parameters in the contexts related to the second terminal, and a related parameter of the second part of parameters in the contexts related to the second terminal. Accordingly, the first network device generates the first context of the first terminal based on the contexts related to the second terminal, which may include that: the first network device directly adds the first part of parameters in the contexts related to the second terminal to the first context of the first terminal; and the first network device processes the second part of parameters in the contexts related to the second terminal to acquire the related parameter of the second part of parameters in the contexts related to the second terminal, and adds the related parameter of the second part of parameters in the contexts related to the second terminal to the first context of the first terminal.

In this example, the first part of parameters and the second part of parameters are different; the set of the first part of parameters and the second part of parameters may include part or all of the parameters of contexts related to the second terminal that can be allocated to one or more other terminals other than the second terminal. The processing of the first part of parameters and the second part of parameters in the contexts related to the second terminal by the first network device is the same as that of the above-described corresponding embodiments, respectively, and the description thereof will not be repeated.

Optionally, after the first network device generates the context of the first terminal, the first network device may release or delete the first part of parameters and the second part of parameters in the contexts related to the second terminal. In this case, if the first part of parameters and the second part of parameters are not all the parameters in the contexts related to the second terminal, the first network device may continue to maintain or save the remaining parameters in the contexts related to the second terminal other than the first part of parameters and the second part of parameters. If the first part of parameters and the second part of parameters are all the parameters in the contexts related to the second terminal, the first network device directly releases or deletes the contexts related to the second terminal. Optionally, after the first network device generates the context of the first terminal, the first network device may still maintain or save the contexts related to the second terminal.

The first context of the first terminal may include the first part of parameters in the contexts related to the second terminal, and/or a parameter which has a mapping or association relationship with the second part of parameters in the contexts related to the second terminal. Referring to FIG. 9, for example, FIG. 9 illustrates UE-1 and UE-2 which serve a same user A or a same application A. Assuming that UE-1 is the first terminal and UE-2 is the second terminal, the first network device has allocated context-2 corresponding to the user A (or application A) to the UE-2, and may allocate context-1 corresponding to the user A (or application A) to the UE-1. The parameter values of the context-1 and the context-2 corresponding to the user A (or application A) may be partially the same, and/or partially different, and/or partially relevant. Alternatively, the parameter values of the context-1 and the context-2 corresponding to the user A (or application A) are completely the same. For example, UE-1 and UE-2 serve the same user A, the second part of parameters of context-2 allocated to UE-2 includes S-NSSAI-2, and the context-1 allocated to UE-1 includes S-NSSAI-1, and the association between the two may be generated based on pre-configuration or negotiation. For another example, UE-1 and UE-2 serve the same application A, the second part of parameters in context-2 allocated to UE-2 includes MBR-2 and GBR-2, and the context-1 allocated to UE-1 includes MBR-1 and GBR-1, and the context-1 of UE-1 also includes the same parameter as the first part of parameters in context-2 of UE-2, for example, UE-1 and UE-2 use the same QoS parameter. There may be many reasons why the context parameters of UE-1 and UE-2 are different. For example, UE-1 and UE-2 have different computing capabilities, different communication capabilities, and different display clarity, which may lead to changes in the context parameter values of the two. It is to be noted with respect to Fig. 9 that UE-1 and UE-2 are any two UEs only serving the same user A or the same application A, and in actual processing, there may be more UEs serving the same user A or the same application A, for example, in addition to UE-1 and UE-2, there may be UE-3, UE-4, etc. serving the same user A or the same application A, and similar processing between UE-1 and UE-2 may be performed between any two UEs serving the same user A or the same application A. However, in FIG. 9, more UEs are not illustrated for simplicity.

In some possible implementations, after the first network device generates the first context of the first terminal, the first network device may save the first context of the first terminal locally.

In the present embodiment, the first network device may locally save the first context of the first terminal, and the processing of the first network device may further include that: the first network device transmits second information, the second information including at least part of parameters of the first context of the first terminal. Accordingly, after the first terminal transmits the first information, the method further includes: the first terminal receives the second information, the second information including at least part of parameters of the first context of the first terminal.

The transmission of the second information by the first network device is transmission of the second information by the first network device to the first terminal; accordingly, the reception of the second information by the first terminal refers to reception of the second information from the first network device by the first terminal.

At least part of the parameters of the first context of the first terminal may be part or all of the parameters of the first context of the first terminal, and the present embodiment does not enumerate the contents or types of the parameters of the first context synchronized by the first network device to the first terminal.

That is, after the first network device generates the first context for the first terminal, the first context of the first terminal may be allocated to a network element (which, e.g., may include the first network device) serving the first terminal and/or the first terminal.

In some possible embodiments, the first terminal may further report relevant indication information of a first capability so that the first network device determines that the first terminal has the first capability.

The processing of the first terminal may further include that: the first terminal transmits first indication information, the first indication information being configured to indicate that the first terminal has a first capability, and the first capability including at least one of: a capability to support or allow allocation of a context related to at least part of contexts of the local terminal to one or more other terminals, and a capability to support or allow allocation of a context related to at least part of contexts of one or more other terminals to the local terminal. Accordingly, the processing of the first network device may further include that the first network device receives first indication information, the first indication information being configured to indicate that the first terminal has a first capability, and the first capability including at least one of: a capability to support or allow allocation of a context related to at least part of contexts of the local terminal to one or more other terminals, and a capability to support or allow allocation of a context related to at least part of contexts of one or more other terminals to the local terminal.

The fact that the first terminal has the first capability may mean that the first terminal supports or allows any processing associated with the first terminal under the operations corresponding to the first capability, and also supports or allows the network side (such as the first network device) to perform processing related to the first capability.

Here, the first terminal transmits the first indication information, which means that the first terminal transmits the first indication information to the first network device. Accordingly, the first network device receives the first indication information, which means that the first network device receives the first indication information from the first terminal.

For the first capability of the first terminal mentioned in the first indication information, the local terminal refers to the first terminal; and any other terminal as involved refers to another terminal other than the first terminal, and said another terminal does not specifically refer to a certain terminal or terminals, and as long as said another terminal is different from the first terminal, it falls within the protection scope of the present embodiment.

The first indication information may indicate that the first terminal has the first capability through description information in a designated field, and the description information in the designated field may be configured according to actual situations, for example, directly describing that the first terminal has the first capability and/or specific content of the first capability, to which no limitation is made. Alternatively, the first indication information may indicate whether the first terminal has the first capability by a value of an indication bit in the designation field, for example, when the value of the indication bit is a first value, it indicates that the first terminal has the first capability, and when the value of the indication bit is a second value, it indicates that the first terminal does not have the first capability. The first value and the second value may be set according to the actual situations, for example, the first value may be 0 while the second value may be 1, or the first value may be 1 while the second value may be 0. The present embodiment does not set a limitation to which field in the message carrying the first indication information is specifically the designated field.

Optionally, the first capability may include only the capability to support or allow allocation of a context related to at least part of contexts of one or more other terminals to the local terminal.

In this case, the first network device may determine that the first terminal can only be allocated with the context related to at least part of contexts of any other terminal, and cannot allocate the contexts related to the first terminal to any other terminal than the first terminal. Alternatively, the first network device may determine that the first terminal can not only be allocated a context related to at least part of contexts of any other terminal, but also can allocate the contexts related to the first terminal to any other terminal than the first terminal. All of the above may fall within the scope of protection of this embodiment.

The at least part of contexts of the one or more other terminals include: a context related to at least part of contexts of each of at least part of other terminals among the one or more other terminals different from the first terminal, or, a context related to at least part of contexts of any one of the one or more other terminals different from the first terminal. Still further, the context related to at least part of contexts of any other terminal may include a first part of parameters in contexts related to any other terminal, and/or related parameters of a second part of parameters in contexts related to any other terminal. A description of the contexts related to any other terminal is similar to the contexts related to the second terminal; accordingly, the description of the first part of parameters and the second part of parameters is also similar to the description of the first part of parameters and the second part of parameters in the contexts related to the second terminal, and thus the description thereof is not repeated here.

Optionally, the first capability may include only the capability to support or allow allocation of a context related to at least part of contexts of the local terminal to one or more other terminals.

In this case, the first network device may determine that the first terminal can only allocate a context related to at least part of contexts of the local terminal to one or more other terminals, and cannot be allocated with a context related to at least part of contexts of any other terminal. Alternatively, the first network device may determine that the first terminal can not only be allocated with a context related to at least part of contexts of any other terminal, but can also allocate the contexts related to the first terminal to any other terminal than the first terminal. All of the above may fall within the scope of protection of this embodiment.

The context related to at least part of contexts of the local terminal may include a first part of parameters in the contexts related to the first terminal, and/or a second part of parameters in the contexts related to the first terminal. The description of the contexts related to the first terminal is similar to the contexts related to the second terminal, and thus the description thereof will not be repeated here.

Optionally, the first capability may include a capability to support or allow allocation of a context related to at least part of the contexts of the local terminal to one or more other terminals, and a capability to support or allow allocation of a context related to at least part of the contexts of the one or more other terminals to the local terminal. In this case, the first network device may determine that the first terminal can not only be allocated with a context related to at least part of contexts of any other terminal, but can also allocate the contexts related to the first terminal to any other terminal than the first terminal.

In some embodiments, the first indication information is further configured to indicate at least one of the following: the first terminal requesting implementation of a function corresponding to the first capability; the first terminal requiring implementation of a function corresponding to the first capability; the first terminal supports performing a function corresponding to the first capability; the first terminal agreeing to implementation of a function corresponding to the first capability; the first terminal requesting permission to implement the function corresponding to the first capability with one or more other terminals.

The first indication information may include an identifier(s) of the one or more other terminals, and the second terminal is included among the one or more other terminals. The identifier(s) of the one or more other terminals include(s) an identifier of each of the one or more other terminals. The one or more other terminals refer to one or more other terminals different from the first terminal or one or more other terminals other than the first terminal.

In some possible embodiments, the transmission of the first indication information by the first terminal and the transmission of the first information by the first terminal may be performed simultaneously.

The first indication information may be carried by one of a registration request message, a registration update message, a session establishment request message, and a session modification request message. In the present embodiment, the first indication information and the first information may be carried in a same message, that is, the first information and the first indication information may be carried by one of the following: a registration request message, a registration update message, a session establishment request message, and a session modification request message.

Optionally, in a case that the first indication information and the first information are transmitted simultaneously, the first indication information may only be used to indicate that the first terminal has the first capability. Furthermore, the first indication information combined with the first information may cause the first network device to determine that the first terminal has the first capability, and the first terminal requests the first network device to start a process of allocating a context related to at least part of contexts of the second terminal to the first terminal to generate the first context of the first terminal. The processing of the first network device is the same as that in the above-described embodiment, and the description thereof will not be repeated.

Optionally, in a case that the first indication information and the first information are transmitted simultaneously, the first indication information may be used to indicate one of followings: the first terminal requesting implementation of the function corresponding to the first capability, the first terminal requiring implementation of the function corresponding to the first capability, the first terminal supporting implementation of the function corresponding to the first capability, the first terminal agreeing to implementation of the function corresponding to the first capability, and the first terminal requesting permission to implement the function corresponding to the first capability with one or more other terminals in addition to indicating that the first terminal has the first capability. Similarly, the combination of the first indication information and the first information may cause the first network device to determine that the first terminal has the first capability, and the first terminal requests the first network device to start the process of allocating the context related to at least part of contexts of the second terminal to the first terminal to generate the first context of the first terminal. It is not repeated here.

Further to requesting permission by the first terminal to implement the function corresponding to the first capability with one or more other terminals: the request for permission by the first terminal to implement the function corresponding to the first capability with one or more other terminals may mean that the first terminal requests the first network device about whether to be allowed to implement the function corresponding to the first capability with one or more other terminals. In this case, the first network device may determine whether or not to allow the first terminal and one or more other terminals to implement the function corresponding to the first capability. The present embodiment does not set any limitation to the rule or mode of determination of the first network device.

It should be noted that the first indication information may further include an identifier(s) of one or more other terminals, that is, indicating to the first network device which other terminals the first terminal is bound to or associated with, so that the first network device can determine which other terminal(s) can perform context allocation with the first terminal. Furthermore, combining the first indication information with the first information may cause the first network device to determine that the first terminal has the first capability, and the first terminal requests the first network device to start the process of allocating a context related to at least part of contexts of the second terminal to the first terminal to generate the first context of the first terminal, which is not described herein.

In some embodiments, in a scenario in which the first terminal simultaneously reports the first information and the first indication information, after the first network device generates the first context of the first terminal, the first network device may transmit only the second information to the first terminal, and the content of the second information is not repeatedly described.

In some embodiments, in a scenario in which the first terminal simultaneously reports the first information and the first indication information, after the first network device receives the first information and the first indication information, the processing of the first network device may further include that: the first network device transmits second indication information, the second indication information being configured to indicate one of: supporting the first terminal to implement the function corresponding to the first capability, and requiring the first terminal to implement the function corresponding to the first capability. Accordingly, the processing of the first terminal may further include that: the first terminal receives second indication information, the second indication information being configured to indicate one of: supporting the first terminal to implement the function corresponding to the first capability, and requiring the first terminal to implement the function corresponding to the first capability.

Transmitting the second indication information by the first network device refers to that the first network device transmits the second indication information to the first terminal; and receiving the second indication information by the first terminal means that the first terminal receives the second indication information from the first network device.

In the present embodiment, the first network device may not transmit the second information to the first terminal, but only transmit the second indication information to the first terminal. The timing of transmitting the second indication information may be after the first network device completes allocation of the first context of the first terminal. Alternatively, the timing of transmitting the second indication information may be after the first network device confirms that the first context may be allocated to the first terminal, in which case the first network device may not yet generate or allocate the first context of the first terminal.

Preferably, in the present embodiment, the second indication information is configured to indicate that the first network device supports the first terminal to implement the function corresponding to the first capability. That is, the first network device may indicate to the first terminal that the first network device supports the first terminal to implement the function corresponding to the first capability only through the second indication information while saving the first context of the first terminal. Accordingly, when receiving the second indication information, the first terminal may determine that the first network device will allocate the first context of the first terminal, or that the first network device has completed allocation of the first context of the first terminal.

In some embodiments, in a scenario in which the first terminal simultaneously reports the first information and the first indication information, after the first network device receives the first information and the first indication information, the first network device may transmit both the second information and the second indication information to the first terminal. Details of the second information and the second indication information will not be repeated.

The second information and the second indication information may be transmitted simultaneously, for example, the second information and the second indication information may be carried by a same message, or for example, the second information and the second indication information may be carried by different messages transmitted simultaneously. Alternatively, the second information and the second indication information may be transmitted at the different times, for example, the second information and the second indication information may be carried by different messages transmitted at different times. In this case, the order in which the first network device transmits the second indication information and the second information is not limited, and the second indication information may be transmitted first and then the second information. Here, not all possible transmission cases of the second information and the second indication information are enumerated.

The present embodiment is particularly applicable to a case where the first indication information is configured to indicate that the first terminal requests permission to perform a function corresponding to the first capability with one or more other terminals. In this case, since the first terminal needs the first network device to determine whether it is allowed to be allocated with contexts of other terminal(s), the first network device can notify through the second indication information that the first terminal is supported to perform the function corresponding to the first capability.

Preferably, in the present embodiment, the second indication information is configured to indicate that the first network device supports the first terminal to implement the function corresponding to the first capability.

In some possible embodiments, the transmission of the first indication information by the first terminal and the transmission of the first information by the first terminal may not be performed simultaneously. In the present embodiment, the first terminal may first transmit the first indication information and then transmit the first information.

The first indication information may be carried by one of a registration request message, a registration update message, a session establishment request message, and a session modification request message. In the present embodiment, the first indication information and the first information may be carried in different messages, for example, the first indication information may be carried in a registration request message, and the first information may be carried in any one of a registration update message, a session establishment request message, and a session modification request message. For another example, the first indication information may be carried in the session establishment request message, and the first information may be carried in the session modification request message. Here, not all possible messages carrying the first information and the first indication information are enumerated.

Optionally, when the first indication information is configured to indicate one of following cases that the first terminal requests to implement the function corresponding to the first capability, the first terminal requests to implement the function corresponding to the first capability, the first terminal supports to implement the function corresponding to the first capability, and the first terminal agrees to implement the function corresponding to the first capability, the first network device may record a context related to at least part of contexts of other terminals that can be allocated to the first terminal, and/or the first network device may start generating a second context of the first terminal for the first terminal, and the second context includes at least part of contexts that can be allocated to one or more other terminals. It should be noted that any other terminal is only used to indicate another terminal different from the first terminal, and does not specifically indicate which other terminal or terminals.

Optionally, the first indication information is configured to indicate that the first terminal requests permission to perform a function corresponding to the first capability with one or more other terminals, which may mean that the first terminal requests the first network device about whether to be allowed to perform a function corresponding to the first capability with one or more other terminals. In this case, the first network device may first determine whether or not the first terminal is allowed to implement the function corresponding to the first capability with one or more other terminals, and the present embodiment does not set a limitation on the rule or mode of determination by the first network device.

It should be noted that the first indication information may include an identifier(s) of one or more other terminals. That is, which other terminals are bound to or associated with the first terminal can be reported to the first network device through the first indication information. Based on the identifier(s) of the one or more other terminals, the first network device can determine a binding relationship or an association relationship between the first terminal and other terminals.

In some embodiments, in a scenario in which the first terminal transmits the first indication information before transmitting the first information, the first network device may generate a second context of the first terminal after receiving the first indication information.

After the first network device receives the first indication information, the method further includes that: the first network device acquires, from a third network device, subscription information of the first terminal, the subscription information of the first terminal including at least part of the subscription information that can be used by one or more other terminals; and the first network device generates a second context of the first terminal based on the subscription information of the first terminal, the second context of the first terminal including at least part of the contexts that can be allocated to one or more other terminals.

The at least part of the subscription information that can be used by one or more other terminals may mean that at least part of the subscription information in the subscription information of the first terminal can be used by another terminal other than the first terminal; alternatively, information related to at least part of the subscription information among the subscription information of the first terminal can be used by another terminal other than the first terminal. The subscription information may include Mobility Management (MM) subscription information. It should be understood that other subscription information may be included, which is not limited or enumerated herein.

The second context of the first terminal includes at least part of the contexts that can be allocated to one or more other terminals, meaning that the second context of the first terminal may include at least part of the contexts capable of being allocated to any other terminal than the first terminal.

The step of acquiring the subscription information of the first terminal by the first network device from the third network device may include that: the first network device sends a second request message to the third network device, the second request message including an indication that the first terminal has a first capability, and the first network device receives the subscription information of the first terminal from the third network device. Accordingly, the processing of the third network device may include that: the third network device receives a second request message from the first network device, the second request message including an indication that the first terminal has a first capability, and the third network device transmits subscription information of the first terminal to the first network device. Here, the third network device may determine that the first terminal has the first capability through the second request message, and therefore, the third network device may allocate, generate or select subscription information of the first terminal satisfying the first capability for the first terminal.

The first network device generates a second context of the first terminal based on the subscription information of the first terminal, which may include that: the first network device generates a second context of the first terminal based on the subscription information of the first terminal, an indication that the first terminal has a first capability, and a local configuration. The local configuration refers to a related configuration for allocating a context on the side of the first network device, and the specific content thereof is not limited in this embodiment.

Before the first network device sends the second request message to the third network device, the method may further include that the first network device determines the third network device. For example, the first network device determining the third network device may mean that the first network device determines the third network device corresponding to the first terminal, or the first network device may select, as the third network device, a candidate network device capable of supporting the first capability from among a plurality of candidate network devices capable of serving the first terminal and capable of generating subscription information.

Optionally, the processing of the first network device may further include that: the first network device acquires, from a fourth network device, Policy and Charging Control (PCC) rules of the first terminal, the PCC rules of the first terminal including at least part of the PCC rules that can be used by one or more other terminals. The first network device generates a second context of the first terminal based on the subscription information of the first terminal, including that: the first network device generates a second context of the first terminal based on the subscription information of the first terminal and PCC rules of the first terminal.

The fourth network device may include a PCF (Policy Control function).

The at least part of PCC rules that can be used by one or more other terminals may mean that at least part of PCC rules of the first terminal can be used by other terminals than the first terminal; alternatively, information related to at least part of the PCC rules of the first terminal can be used by other terminal other than the first terminal.

The step of acquiring the PCC rules of the first terminal by the first network device from the fourth network device may include that: the first network device sends a third request message to the fourth network device, the third request message including an indication that the first terminal has a first capability, and the first network device receives the PCC rules of the first terminal from the fourth network device. Accordingly, the processing of the fourth network device may include that: the fourth network device receives a third request message from the first network device, and sends the PCC rules of the first terminal to the first network device. Here, the fourth network device may determine that the first terminal has the first capability through the third request message, and therefore, the fourth network device may allocate, generate or select PCC rules of the first terminal satisfying the first capability for the first terminal.

The step of generating the second context of the first terminal by the first network device based on the subscription information of the first terminal and the PCC rules of the first terminal may include that: the first network device generates the second context of the first terminal based on the subscription information of the first terminal, the PCC rules of the first terminal, an indication that the first terminal has a first capability, and a local configuration.

Before the first network device transmits the third request message to the fourth network device, the method may further include that: the first network device determines the fourth network device. For example, the first network device determining the fourth network device may mean that the first network device determines the fourth network device corresponding to the first terminal, or the first network device may select, as the fourth network device, a candidate network device capable of supporting the first capability from among a plurality of candidate network devices capable of serving the first terminal and capable of generating a PCC rule.

In some embodiments, in a scenario in which the first terminal transmits the first indication information before the first terminal transmits the first information, after the first network device generates the second context of the first terminal, the first network device may locally save the second context of the first terminal.

The processing after the first network device generates the second context of the first terminal may further include that: the first network device transmits third information, the third information including at least part of parameters of the second context of the first terminal. Accordingly, after the first terminal transmits the first indication information, the method further includes that: the first terminal receives the third information, the third information including at least part of parameters of the second context of the first terminal, and the second context of the first terminal including at least part of contexts that can be allocated to one or more other terminals.

The transmission of the third information by the first network device refers to transmission of the third information by the first network device to the first terminal; accordingly, the reception of the third information by the first terminal refers to reception of the third information from the first network device by the first terminal.

The at least part of the parameters of the second context of the first terminal may be part or all of the parameters of the second context of the first terminal, and the present embodiment does not exhaustively list and limit the contents or types of the parameters of the second context synchronized by the first network device to the first terminal.

That is, after the first network device generates the second context for the first terminal, the second context of the first terminal may be allocated to a network element (for example, may include the first network device) serving the first terminal and/or the first terminal.

In some embodiments, in a scenario in which the first terminal transmits the first indication information before the first information, after the first network device receives the first indication information, the processing of the first network device may further include that: the first network device transmits the second indication information, the second indication information being configured to indicate one of the following: supporting the first terminal to implement the function corresponding to the first capability, and requiring the first terminal to implement the function corresponding to the first capability. Accordingly, the processing of the first terminal may further include that: the first terminal receives the second indication information, the second indication information being configured to indicate one of: supporting the first terminal to implement the function corresponding to the first capability, and requiring the first terminal to implement the function corresponding to the first capability.

In the present embodiment, the first network device may not transmit the third information to the first terminal, but only transmit the second indication information to the first terminal. The transmission timing of the second indication information may be after the first network device completes allocation of the second context of the first terminal; alternatively, the transmission timing of the second indication information may be after the first network device confirms that the second context may be allocated to the first terminal, in which case the first network device may not yet allocate or generate the second context of the first terminal.

The second indication information is configured to indicate that the first terminal is supported to implement the function corresponding to the first capability, which may refer to that the first network device agrees or allows or supports allocation of a first context of the first terminal based on a future request for the first terminal. In this case, the first terminal may start transmitting the first information at any desired time after receiving the second indication information.

The second indication information is configured to indicate that the first terminal is required to implement the function corresponding to the first capability, which may refer to that the first network device indicates that the first terminal can start requesting for allocation of the first context of the first terminal. In this case, the first terminal may start transmitting the first information after receiving the second indication information; alternatively, the first terminal may start transmitting the first information at any desired time after receiving the second indication information.

In such an embodiment, after the first network device generates the second context of the first terminal, the second context may be stored locally.

In some embodiments, in a scenario in which the first terminal transmits the first indication information before the first terminal transmits the first information, the first network device may transmit the third information and the second indication information to the first terminal.

The third information and the second indication information may be transmitted simultaneously, for example, the third information and the second indication information may be carried by the same message or by different messages transmitted simultaneously. Alternatively, the third information and the second indication information may not be transmitted at the same time, for example, the third information and the second indication information are carried by different messages transmitted at different times, and the order in which the first network device transmits the second indication information and the third information is not limited here.

In some embodiments, the first terminal may transmit the first information to the first network device after receiving the third information and/or the second indication information, and the processing after the first network device receives the first information will not be repeated here.

In some possible embodiments, in a scenario in which the first terminal sends the first indication information before the first terminal sends the first information, if the first network device determines that the first terminal is not allowed to implement the function corresponding to the first capability, the first network device may send information indicating that the first terminal is rejected or not allowed to implement the function corresponding to the first capability to the first terminal. In this case, the first network device and other related third network devices and/or fourth network devices may perform a subsequent processing flow for the first terminal according to the provisions in the relevant protocol, which is not limited here.

In some possible embodiments, the process of transmitting the first information by the first device can only be performed on the basis that the contexts related to the second terminal has been allocated to the network side (for example, the first network device serving the first terminal and the second terminal, or the second network device serving the second terminal). Therefore, the process of transmitting the third indication information by the second terminal and the process of completing the allocation of the contexts related to the second terminal by the second network device before the first device transmits the first information will be described below.

The second terminal transmits the third indication information, which specifically may include that: the second terminal transmits the third indication information to the second network device. Accordingly, the second network device receives the third indication information, which may include that the second network device receives the third indication information from the second terminal. The third indication information is configured to indicate that the second terminal has a first capability, and the first capability includes at least one of a capability to support or allow allocation of a context related to at least part of contexts of the local terminal to one or more other terminals, and a capability to support or allow allocation of a context related to at least part of contexts of one or more other terminals to the local terminal.

Note that, in order to clarify the related processing performed by the network side on the second terminal, the network devices corresponding to the second terminal are all referred to as second network devices hereinafter, but the description of the second network device hereinafter does not mean that such description cannot be applied to the first network device. In a case where the first network device serves both the first terminal and the second terminal, the second network device hereinafter can be replaced with the first network device, and the description will not be repeated.

The third indication information may be carried by one of a registration request message, a registration update message, a session establishment request message, and a session modification request message.

In the present embodiment, the second terminal may refer to any terminal other than the first terminal, or the second terminal may be any terminal having a first capability and having a binding relationship with the first terminal.

For the first capability mentioned in the third indication information, the local terminal refers to the second terminal. Any one of the one or a plurality of other terminals as involved refers to any other terminal than the second terminal.

The third indication information may indicate the second terminal having the first capability through description information in a designated field, or the third indication information may indicate whether the second terminal has the first capability through a value of an indication bit in the designated field. The description of the mode of carrying the third indication information is similar to the first indication information in the related description of the first terminal in the foregoing embodiments, and the description thereof is not repeated here.

Optionally, the first capability may include only the capability to allocate a context related to at least part of contexts of one or more other terminals to the local terminal (i.e., the second terminal). In this case, the second network device may determine that the second terminal can only be allocated with a context related to at least part of contexts of any other terminal, and cannot allocate the contexts related to the second terminal to any other terminal than the second terminal. Alternatively, the second network device may determine that the second terminal can not only be allocated with a context related to at least part of contexts of any other terminal, but can also allocate the contexts related to the second terminal to any other terminal than the second terminal. All of the above may be within the scope of protection of this embodiment. Here, the description of the at least part of contexts of the one or more other terminals is also similar to that in the foregoing embodiment, except that said other terminals in the present embodiment are terminals different from the second terminal, and will not be repeatedly described here.

Optionally, the first capability may include only the ability to allocate a context related to at least part of contexts of the local terminal (i.e., the second terminal) to one or more other terminals. In this case, the second network device may determine that the second terminal can only allocate a context related to at least part of contexts of the local terminal to one or more other terminals, and cannot be allocated with a context related to at least part of contexts of any other terminal. Alternatively, the second network device may determine that the second terminal can not only be allocated with a context related to at least part of contexts of any other terminal, but can also allocate the contexts related to the second terminal to any other terminal than the second terminal. All of the above may be within the scope of protection of this embodiment. Here, the description of the contexts related to the second terminal is the same as that in the foregoing embodiments, and thus the description thereof will not be repeated here.

Optionally, the aforementioned first capability may include a capability to allocate a context related to at least part of the contexts of the local terminal (i.e., the second terminal) to one or more other terminals, and a capability to allocate a context related to at least part of the contexts of one or more other terminals to the local terminal (i.e., the second terminal). In this case, the second network device may determine that the second terminal can not only be allocated with a context related to at least part of contexts of any other terminal, but can also allocate the contexts related to the second terminal to any other terminal than the second terminal.

After receiving the third indication information, the second network device may determine that the second terminal has the first capability.

In some embodiments, the third indication information is further configured to indicate at least one of the following: the second terminal requesting implementation of a function corresponding to the first capability; the second terminal requiring implementation of a function corresponding to the first capability; the second terminal supporting implementation of a function corresponding to the first capability; the second terminal agreeing to implementation of a function corresponding to the first capability; and the second terminal requesting permission to implement the function corresponding to the first capability with one or more other terminals.

The third indication information includes an identifier(s) of the one or more other terminals. The one or more other terminals refer to one or more other terminals different from the second terminal or one or more other terminals other than the second terminal. The one or more other terminals may include the first terminal.

The second terminal requesting implementation of the function corresponding to the first capability may mean that the second terminal requests the second network device to start performing the function corresponding to the first capability, such as requesting the second network device to start allocating at least part of contexts related to the second terminal to other terminals, and/or requesting the second network device to allocate at least part of contexts that can be allocated to one or more other terminals to the second terminal.

The second terminal requiring implementation of the function corresponding to the first capability is similar to the second terminal requesting implementation of the function corresponding to the first capability, and will not be described in detail.

The second terminal supporting the implementation of the function corresponding to the first capability may mean that the second terminal notifies the second network device that the function corresponding to the first capability can be supported, and in this case, the second terminal does not explicitly indicate for which terminal or which terminals the function corresponding to the first capability is started to be implemented, and the second network device may directly implement the function corresponding to the first capability of the second terminal after receiving the relevant request.

The second terminal agreeing to implementation of the function corresponding to the first capability, which is similar to the above description that the second terminal supports implementation of the function corresponding to the first capability, means that the second terminal notifies the second network device of agreeing to implementation of the function corresponding to the first capability if necessary.

The second terminal requesting permission to perform a function corresponding to the first capability with one or more other terminals may mean that the second terminal requests to the second network device about whether implementation of a function corresponding to the first capability with one or more other terminals is permitted. In this case, the second network device may determine whether or not the second terminal is allowed to implement the function corresponding to the first capability with one or more other terminals, and the present embodiment does not limit the rule or mode of determination by the second network device.

It should be noted that the third indication information may include an identifier(s) of one or more other terminals. That is, which other terminals are bound to or associated with the second terminal can be reported to the second network device through the third indication information. Based on the identifier(s) of the one or more other terminals, the second network device can determine mutual allocation of contexts may be performed between the second terminal and which other terminal or terminals.

In some embodiments, after the second network device receives the third indication information, the contexts related to the second terminal may be generated. The contexts related to the second terminal include at least part of the contexts that can be allocated to one or more other terminals.

After the second network device receives the third indication information, the method further includes that: the second network device acquires, from the third network device, subscription information of the second terminal, the subscription information of the second terminal including at least part of the subscription information that can be used by one or more other terminals; the second network device generates contexts related to the second terminal based on the subscription information of the second terminal, the contexts related to the second terminal including at least part of the contexts capable of being allocated to one or more other terminals.

The at least part of the subscription information that can be used by one or more other terminals may mean that at least part of the subscription information in the subscription information of the second terminal can be used by another terminal other than the second terminal; alternatively, information related to at least part of subscription information among the subscription information of the second terminal can be used by another terminal other than the second terminal.

The step of acquiring the subscription information of the second terminal by the second network device from the third network device may include that: the second network device sends a fourth request message to the third network device, the fourth request message including an indication that the second terminal has a first capability, and the second network device receives the subscription information of the second terminal from the third network device. Accordingly, the processing of the third network device may include that the third network device receives a fourth request message from the second network device, and transmits the subscription information of the second terminal to the second network device. Here, the description of the third network device allocating the subscription information of the second terminal is similar to the description of the third network device allocating the subscription information of the first terminal in the foregoing embodiments, and the description will not be repeated.

The second network device generates the contexts related to the second terminal based on the subscription information of the second terminal, which may include that: the second network device generates the contexts related to the second terminal based on the subscription information of the second terminal, an indication that the second terminal has a first capability, and a local configuration. The process of selecting or determining the third network device by the second network device is similar to the process of determining the third network device by the first network device in the foregoing embodiments, and will not be described in detail.

Optionally, the processing of the second network device may further include that: the second network device acquires PCC rules of the second terminal from the fourth network device, the PCC rules of the second terminal including at least part of the PCC rules that can be used by one or more other terminals. The second network device generates contexts related to the second terminal based on the subscription information of the second terminal, which includes that: the second network device generates the contexts related to the second terminal based on the subscription information of the second terminal and the PCC rules of the second terminal.

The PCC rules of the second terminal include at least part of PCC rules that can be used by one or more other terminals, which is the same as the description in which the PCC rules of the first terminal include at least part of PCC rules that can be used by one or more other terminals in the foregoing embodiments, and the difference is only in concepts relative to other terminals, so it is not repeated.

The step of acquiring the PCC rules of the second terminal by the second network device from the fourth network device may include that: the second network device sends a fifth request message to the fourth network device, the fifth request message including an indication that the second terminal has a first capability, and the second network device receives the PCC rules of the second terminal from the fourth network device. Accordingly, the processing of the fourth network device may include that: the fourth network device receives a fifth request message from the second network device, and sends the PCC rules of the second terminal to the second network device. Here, the processing of the fourth network device is similar to the processing related to the fourth network device transmitting the PCC rules of the first terminal to the first network device in the foregoing embodiments, except that the present embodiment is for the second terminal, and thus the description thereof will not be repeated.

The second network device generates the contexts related to the second terminal based on the subscription information of the second terminal and the PCC rules of the second terminal, which may include that the second network device generates the contexts related to the second terminal based on the subscription information of the second terminal, the PCC rules of the second terminal, the indication that the second terminal has the first capability, and the local configuration.

The process of selecting or determining the fourth network device by the second network device is similar to the process of determining the fourth network device by the first network device in the foregoing embodiments, and will not be described in detail.

In some embodiments, after the second network device generates the contexts related to the second terminal, the second network device may save the contexts related to the second terminal locally.

The processing after the second network device generates the contexts related to the second terminal may further include that: the second network device transmits sixth information, the sixth information including at least part of parameters of the contexts related to the second terminal. Accordingly, after the second terminal transmits the third indication information, the method further includes that: the second terminal receives the sixth information, the sixth information including at least part of parameters of the contexts related to the second terminal, and the contexts related to the second terminal including at least part of contexts capable of being allocated to one or more other terminals.

Since the description of the sixth information interacted between the second network device and the second terminal is similar to the description of the third information interacted between the first network device and the first terminal in the aforementioned embodiment, it will not be repeated.

In some embodiments, after the second network device receives the third indication information, the method further includes that: the second network device transmits fourth indication information, the fourth indication information being configured to indicate one of: supporting the second terminal to implement the function corresponding to the first capability, and requiring the second terminal to implement the function corresponding to the first capability. Accordingly, the processing of the second terminal may further include receiving fourth indication information by the second terminal, the fourth indication information being configured to indicate one of: supporting the second terminal to implement the function corresponding to the first capability, and requiring the second terminal to implement the function corresponding to the first capability.

The detailed description of the fourth indication information is similar to the second indication information in the foregoing embodiments except that the second indication information corresponds to the first terminal and the fourth indication information corresponds to the second terminal, and the description thereof will not be repeated here.

In the present embodiment, the second network device may not transmit the sixth information to the second terminal, and only transmit the fourth indication information to the second terminal. The fourth indication information may be transmitted after the second network device completes allocation of the contexts related to the second terminal or after the second network device confirms that the contexts related to the second terminal may be allocated.

In such an embodiment, the contexts related to the second terminal, after being generated by the second network device, may be stored locally.

In some embodiments, after the second network device receives the third indication information, the second network device may transmit the foregoing sixth information and the fourth indication information to the second terminal. The sixth information and the fourth indication information may be transmitted simultaneously, or may not be transmitted simultaneously.

In another possible embodiment, if the second network device determines to not allow the second terminal to implement the function corresponding to the first capability, the second network device may send fifth indication information to the second terminal, and the fifth indication information may be configured to indicate that the second terminal is rejected or not allowed to implement the function corresponding to the first capability. In this case, the second network device and other related third network device and/or fourth network device may adopt the provisions in the relevant protocol to perform the subsequent procedure for the second terminal, which is not limited here.

It should be understood that the above embodiments only describes how to generate the contexts related to the second terminal, and in actual processing, after allocation of the contexts related to the second terminal is completed, the second terminal may also perform transmission of the first information which is carried out by the first terminal and the related processing thereafter, for example, the second terminal may be used as a new first terminal in the foregoing embodiments, and the third terminal may be used as a new second terminal in the foregoing embodiments, to perform various processes related to the first terminal in the foregoing embodiments, and the description will not be repeated here.

The types of the contexts involved in this embodiment may include UE context in AMF and/or SM context, and various parameters that may be included in these two types of contexts have been described in detail in Tables 1 and 2 of the foregoing embodiments, and will not be repeated here. According to the communication method provided in the foregoing embodiments, it is possible to migrate or copy contexts, so that a data stream (partially and/or completely, uplink and/or downlink) of the second terminal can be migrated to the first terminal and the network element serving the first terminal, and the first terminal can continue subsequent data transmission or reception.

Next, In conjunction with different possible network elements of the first network device and the second network device as well as possible types of contexts, the communication method provided by the foregoing embodiments is described in different processes.

In an embodiment, the second network device may be a second AMF, and the third indication information may be carried by a registration request message or may be carried by a registration update message. The type of contexts related to the second terminal may be the context of the second terminal in the AMF (UE context in AMF); for example, if the second terminal is denoted as UE1 and the second AMF is denoted as AMF1, the context of the second terminal in the second AMF may specifically be the UE1 context in AMF1.

The types of parameters that can be included in the contexts of any terminal in the AMF (UE context in AMF) may be as shown in Table 1, and the description will not be repeated here. It should be noted that the contexts related to the second terminal in the present embodiment may include at least part of contexts capable of being allocated to one or more other terminals. In conjunction with the UE context in AMF of the foregoing Table 1, exemplarily, at least part of the contexts related to the second terminal capable of being allocated to one or more other terminals may include all of the parameters in Table 1. Exemplarily, part of parameters of at least part of contexts capable of being allocated to one or more other terminals among the contexts related to the second terminal may include, for example, at least one of: access management policy association (such as a served PCF and an established association) information, UE policy association information, Allowed S-NSSAI information, and parameters of each PDU session, but not all possible parameters are enumerated here. In this embodiment, the processing performed by the second AMF is the same as the processing performed by the second network device in the foregoing embodiments, and the description thereof will not be repeated.

In an embodiment, the first network device may be a first AMF, the first indication information may be carried by a registration request message or may be carried by a registration update message, and in this embodiment, the first terminal transmits the first indication information first and does not transmit the first information simultaneously.

The type of the second context of the first terminal may be the context of the first terminal in the AMF (UE context in AMF), and the possible types of parameters may be as shown in Table 1, and the description will not be repeated here. It should be noted that the second context of the first terminal in the present embodiment may include at least part of contexts capable of being allocated to one or more other terminals. In conjunction with the UE context in AMF of the foregoing Table 1, exemplarily, at least part of the second context of the first terminal capable of being allocated to one or more other terminals may include all of the parameters in Table 1. Exemplarily, part of parameters of at least part of contexts capable of being allocated to one or more other terminals among the second context of the first terminal may include, for example, at least one of: access management policy association (such as a served PCF and an established association) information, UE policy association information, Allowed S-NSSAI information, and parameters of each PDU session, and not all possible parameters are enumerated here.

In an embodiment, the second network device may be a second SMF, and the third indication information may be carried by a session establishment request message or a session modification request message, and the type of the contexts related to the second terminal may be SM context. The types of parameters that may be included in the SM context may be as shown in Table 2, and the description will not be repeated here. It should be noted that the contexts related to the second terminal in the present embodiment may include at least part of contexts capable of being allocated to one or more other terminals. In conjunction with the aforementioned SM context of Table 2, exemplarily, at least part of contexts related to the second terminal capable of being allocated to one or more other terminals may include all of the parameters in Table 2. For example, part of parameters of at least part of contexts of capable of being allocated to one or more other terminals among the contexts related to the second terminal may include at least one of the following parameters in Table 2: attribute parameters (e.g., S-NSSAI, DNN, SSC mode, PDU session identifier, etc.) information of the PDU session, information about interaction with application servers (e.g., DNAI, UE IP address), QoS parameter information of each QoS data flow, etc., and not all possible parameters are enumerated here. In this embodiment, the processing performed by the second SMF is the same as the processing performed by the second network device in the foregoing embodiments, and the description thereof will not be repeated.

**In** an embodiment, the first network device may be a first SMF, and the first indication information may be carried by a session establishment request message or a session modification request message, and in this embodiment, the first terminal transmits the first indication information first and does not transmit the first information at the same time. The type of the second context of the first terminal may be SM context, and the related description of the SM context of the first terminal is similar to the related description of the SM context of the second terminal in the foregoing embodiments, and will not be described in detail.

In an embodiment, the second network device may be a second AMF which has allocated the contexts related to the second terminal, i.e. the aforementioned contexts of the second terminal in AMF (UE context in AMF). In this case, the first network device may be the first AMF.

Optionally, if the first terminal has transmitted the first indication information, the first terminal may transmit the first information to the first AMF. The first information may include the aforementioned first request message and/or first identifier. The first information may be carried by a registration request message or a registration update message.

Optionally, if the first terminal has not yet transmitted the first indication information, the first terminal may transmit the first information and the first indication information to the first AMF. The first information may include the aforementioned first request message and/or first identifier. The first information and the first indication information may be carried by a registration request message or a registration update message.

Optionally, the first terminal may transmit the first information and the first indication information to the first AMF even though the first terminal has transmitted the first indication information. The first information may include the aforementioned first request message and/or first identifier. This situation is particularly applicable to a situation where a position movement occurs after the first terminal transmits the first indication information, and the first network device serving the first terminal may change.

Accordingly, the first AMF may generate the first context of the first terminal based on the contexts related to the second terminal, and the specific processing thereof is the same as the specific processing of generating the first context of the first terminal in the foregoing embodiments, and the description thereof is not repeated.

The type of the first context of the first terminal may be the context of the first terminal in AMF (UE context in AMF). Note that, in the present embodiment, the first context of the first terminal may include a context related to at least part of contexts that can be allocated by the second to the first terminal. In conjunction with the UE context in AMF of the foregoing Table 1, exemplarily, at least part of contexts related to the second terminal capable of being allocated to the first terminal may include all of the parameters in Table 1. Exemplarily, at least part of contexts related to the second terminal capable of being allocated to the first terminal may include part of parameters in Table 1, such as at least one of the following: access management policy association (such as a served PCF and an established association) information (so that the first terminal and the second terminal can use the same PCF), UE policy association information, Allowed S-NSSAI information, and parameters of each PDU session; and not all possible parameters are enumerated here.

In an embodiment, the second network device may be a second SMF which has allocated the contexts related to the second terminal, i.e. the aforementioned SM context of the second terminal. In this case, the first network device may be the first SMF.

Optionally, if the first terminal has already transmitted the first indication information, the first terminal may transmit the first information to the first SMF. The first information may include the aforementioned first request message and/or first identifier. The first information may be carried by a session establishment request message or a session modification request messsage.

Optionally, if the first terminal has not transmitted the first indication information, the first terminal may transmit the first information and the first indication information to the first SMF. The first information may include the aforementioned first request message and/or first identifier. The first information and the first indication information may be carried by a session establishment request message or a session modification request message.

Accordingly, the first SMF may generate the first context of the first terminal based on the contexts related to the second terminal, and the specific processing thereof is the same as the specific processing of generating the first context of the first terminal in the foregoing embodiments, and the description thereof is not repeated.

The type of the first context of the first terminal may be the SM context of the first terminal. The parameter types that may be included in the SM context may be as shown in Table 2, and the description thereof will not be repeated here. Note that, in the present embodiment, the first context of the first terminal may include a context related to at least part of contexts that the second terminal can allocate to the first terminal. In conjunction with the SM context of Table 2, exemplarily, at least part of contexts related to the second terminal capable of being allocated to the first terminal may include a portion of the parameters in Table 2. Exemplarily, at least part of contexts related to the second terminal capable of being allocated to the first terminal may include at least one of the following parameters in Table 2: attribute parameter information (such as S-NSSAI, DNN, SSC mode, PDU session identifier, etc.) of the PDU session (used for the first terminal to acquire the same session attribute as the second terminal), information about interaction (such as DNAI, UE IP address) with the application server (which can ensure better service continuity), QoS parameter information of each QoS data flow, and etc. In this embodiment, the processing performed by the second SMF is the same as the processing performed by the second network device in the foregoing embodiments, and the description thereof will not be repeated.

Hereinafter, the above-described method will be exemplarily described in conjunction with various embodiments, and the basic assumption of the flow of each of the following embodiments is that the second terminal is a terminal that initially serves the user A, and the first terminal is a terminal that subsequently undertakes part of the service of the second terminal and serves the user A. Therefore, it is necessary to describe the processes of the first terminal and the second terminal separately. It should be understood that the first terminal may acquire the context of other UEs (such as the second terminal), or the context of the first terminal may be acquired by the second terminal; and the same applies to the second terminal.

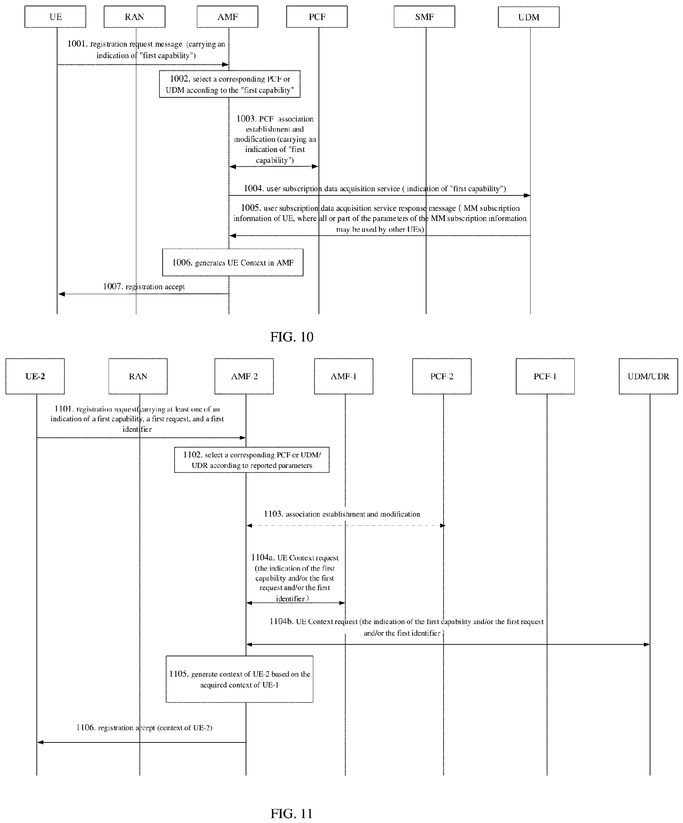

In conjunction with FIG. 10, a related flow of transmitting an indication of the first capability by the first terminal or the second terminal is exemplarily described.

In Step 1001: UE transmits a Registration request message carrying an indication of "first capability" to an AMF.

In this embodiment, since only one UE reporting the first capability is described, only one UE may be included in FIG. 10.

In one case, the UE in FIG. 10 may be the second terminal, and the AMF in FIG. 10 may be the second network device (such as a second AMF) serving the second terminal. The indication of the first capability in step 1001 may be the third indication information in the foregoing embodiments, that is, the third indication information is carried by a registration request message, and the registration request message may also contain other contents specified in the protocol in addition to the third indication information, which is not limited here. In another case, the UE in FIG. 10 may be the first terminal, and the AMF in FIG. 10 may be the first network device (such as the first AMF) serving the first terminal. The indication of the first capability in step 1001 may be the first indication information in the foregoing embodiments, that is, the first indication information is carried by a registration request message, and the registration request message may also contain other contents specified in the protocol in addition to the first indication information, which is not limited here. It should be understood that, in some possible cases, the AMF may be a network device serving the first terminal and the second terminal.

The indication of the first capability may be understood as at least one of the following: the UE has a "first capability", and the detailed description of the first capability is the same as that in the foregoing embodiments, and will not be repeatedly described. The UE requests, or requires, or supports, or agrees to implementation of migration or duplication of part or all parameters of the UE 1 context, that is, the UE requests, or requires, or supports, or agrees to implementation of a function corresponding to the first capability; the UE requests whether or not the network side (specifically, the AMF in FIG. 10) allows or requires a plurality of terminals to implement the function described in the "first capability", that is, the UE requests permission to perform a function corresponding to the first capability with one or more other terminals in the foregoing embodiments.

In Step 1002 (optional): after receiving the indication of "first capability", the AMF selects a corresponding PCF and/or UDM according to the "first capability". The PCF is the fourth network device in the foregoing embodiments, and the UDM is the third network device in the foregoing embodiments.

Step 1002 may be an optional step, i.e. in one possible case, after step 1001 is completed, step 1003 may be performed without selecting a PCF and/or UDM; and in another possible case, after completion of step 1001, it is necessary to perform step 1002 to select a PCF and/or UDM. The manner of selecting a PCF and/or UDM by the AMF is the same as that in the foregoing embodiments, and the description will not be repeated.

In Step 1003: the AMF initiates a PCF association establishment or modification (association est./mod.) message which carries an indication of "first capability" to the PCF, and the PCF may subsequently transmit the same or associated UE policy to other associated UEs accordingly.

In Step 1004: the AMF sends a message to the UDM to request for subscription information (this message may specifically be a user subscription data acquisition service (Nudm _ SDM _ Get) message as shown in FIG. 10) containing an indication of "first capability".

In one case, the AMF in FIG. 10 may be a second network device (such as the second AMF in the foregoing embodiments) serving the second terminal. The user subscription data acquisition service (Nudm _ SDM _ Get) message in step 1004 may be a fourth request message in the foregoing embodiments. In another case, the AMF in FIG. 10 may be the first network device (such as a first AMF) serving the first terminal. The user subscription data acquisition service (Nudm _ SDM _ Get) message in step 1004 may be the second request message in the foregoing embodiments.

In Step 1005: the UDM replies to the AMF with MM subscription information of the UE, and all or part of the parameters of the MM subscription information may be used by other UEs. In this step, the MM subscription information of the UE replied by the UDM to the AMF may be carried by a user subscription data acquisition service response message (Nudm_SDM_Get_response) shown in FIG. 10.

In Step 1006: the AMF generates a UE Context in AMF based on the subscription information of the UE 1 acquired from the UDM, the indication of the "first capability" and the local configuration, and part or all of the parameters in the UE Context in AMF have the possibility of being used by other UEs. In this step, if the UE is the first terminal, the UE Context in AMF may be the second context of the first terminal in the foregoing embodiments. If the UE is a second terminal, the UE Context in AMF may be contexts related to the second terminal in the foregoing embodiments.

In Step 1007: the AMF carries an acknowledgement indication in a Registration accept message which is configured to inform the UE 1 that the function corresponding to the "first capability" is permitted or required to be performed. In this step, if the UE is the first terminal, the acknowledgement indication may refer to the second indication information in the foregoing embodiments. If the UE is the second terminal, the acknowledgement indication may be the fourth indication information in the foregoing embodiments.

It should be noted that other network devices, such as an SMF and an RAN, are also illustrated in FIG. 10, and the SMF is a device on the core network side, which is illustrated in FIG. 10 in order to illustrate the integrity of the architecture. The role of the SMF in the example of FIG. 10 is not limited here. The RAN may be an access network device serving the UE 1, and the role of the RAN in the example of FIG. 10 is also not limited.

The flow shown in FIG. 10 may be executed in advance for both the first terminal and the second terminal, so that the corresponding device on the network side knows that the first terminal and the second terminal have the first capability, and then implements the flow shown in FIG. 11 when the first terminal needs to perform allocation of contexts associated with other UEs. In FIG. 11, UE-2 is the first terminal in the foregoing embodiments, UE-1 is the second terminal in the foregoing embodiments, AMF-1 is the second network device in the foregoing embodiments, AMF-2 is the first network device in the foregoing embodiments, and UDM/UDR is the third network device in the foregoing embodiments. FIG. 11 mainly illustrates a processing flow in which the context of the UE-1 is needed to be sent to the UE-2 when the UE-2 undertakes part or all of the service of the UE-1.

In Step 1101: the UE-2 sends a Registration request message to the AMF-2, and the registration request message carries at least one of the following parameters: an indication of the first capability, that is, the first indication information of the foregoing embodiment, which will not be repeated; a first request message, configured to indicate that the AMF-2 needs to allocate part or all of information such as a context and policy of another UE to the UE-2 for use; a first identifier, which may include one or more of the following: an identifier of the associated UE-1, i.e., indicating an existing UE context of which UE is to be allocated; an associated service (or application) identifier (that is, the identifier of the first service), that is, indicating a UE context corresponding to which service is to be allocated, which may be used together with the identifier of the UE-1 to further define the content to be allocated, or may be used alone; an associated user identifier (that is, the identifier of the first user), that is, indicating a UE context corresponding to which user identifier is to be allocated; and etc.. A plurality of UEs such as UE-1 and UE-2 can be used by a same user, and thus a user identifier can be associated with information such as contexts across a plurality of UEs. It should be understood that the above is merely an exemplary description, and the first identifier may further include at least one of the identifier of the first PDU session, the identifier of the first QoS flow, and the like illustrated in the foregoing embodiments, and is not enumerated here.

In Step 1102: AMF-2 selects a corresponding PCF or UDM/UDR. The process of selecting a PCF and/or UDM/UDR by AMF-2 is the same as that of the foregoing embodiment, and the steps will be repeatedly described.

In Step 1103: the AMF-2 transmits a PCF association establishment or modification request to the PCF-2 for triggering the PCF to transmit or update a UE policy to the current UE-2, and the processing of this step is not limited in this embodiment.

Both the foregoing steps 1102 and 1103 are optional steps and are not limited herein.

If the same AMF serves UE-1 and UE-2, such as AMF-2, the interaction between step 1104 a and step 1104 b is not needed to be performed, and step 1105 is performed directly. If the AMFs serving UE-1 and UE-2 are not the same, step 1104a or step 1104b is performed:

In step 1104a, AMF-2 interacts with AMF-1 to acquire the UE Context allocated to UE-1 by transmitting a UE Context request to AMF-1, and the UE Context request transmitted by AMF-2 to AMF-1 may carry an indication of the first capability and/or a first request and/or a first identifier.

In step 1104b, the AMF-2 acquires the pre-stored UE Context allocated to the UE-1 by transmitting the UE Context request to the UDM/UDR, and the UE Context request transmitted by the AMF-2 to the UDM/UDR may carry the indication of the first capability and/or the first request and/or the first identifier.

In Step 1105: the AMF-2 generates the UE Context of the UE-2 based on the acquired UE Context of the UE-1, where the UE Context of the UE-2 may be completely or partially the same as that of the UE-1, or may be partially modified. Note: The above-mentioned acquisition of the UE Context allocated to the UE-1 may be the acquisition of all or part of contents or associated contents, and is not limited herein

In Step 1106: The AMF-2 sends to the UE-2 a registration accept message, which may carry the second information in the foregoing embodiments, that is, the UE Context (or at least part of parameters of the UE Context) generated for the UE-2 may be transmitted to the UE-2.

It should be pointed out that other network devices (such as RAN, PCF-1) are also illustrated in FIG. 11, which are illustrated in FIG. 11 mainly for the purpose of illustrating the integrity of the architecture. Regarding the network element functions illustrated in FIG. 11 but not described in the foregoing steps, the present embodiment does not limit their functions.

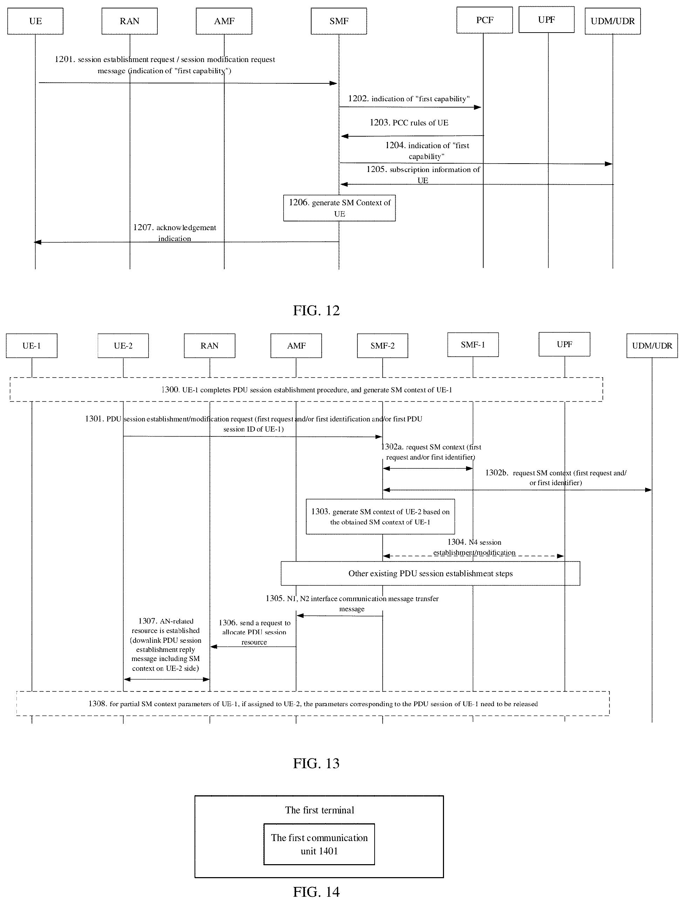

Another exemplary description is given in conjunction with FIG. 12 for the related flow of transmitting the indication of the first capability by the first terminal or the second terminal, specifically:
In Step 1201: a UE sends, to an SMF, a session establishment request and/or a session modification request message, which may carry an indication of "first capability". In the present embodiment, since only one UE reporting the first capability is described, only one UE may be included in FIG. 12. In one case, the UE in FIG. 12 may be the second terminal, and the SMF may be the second network device serving the second terminal (such as the second SMF in the embodiment). The indication of the first capability in step 1201 may be the third indication information in the foregoing embodiments. In another case, the UE in FIG. 12 may be the first terminal, the SMF may be the first network device serving the first terminal (such as the first SMF in the foregoing embodiments), and the indication of the first capability in step 1201 may be the first indication information in the foregoing embodiments.
**In** Step 1202: the SMF sends an indication of the first capability to the PCF. The PCF is the fourth network device in the foregoing embodiments. In one case, the SMF may be the second network device serving the second terminal (such as the second SMF in the aforementioned embodiment), and the indication of the first capability in step 1202 may be carried by the fifth request message in the aforementioned embodiment. In another case, the SMF may be the first network device (such as the first SMF in the aforementioned embodiment) serving the first terminal, and the indication of the first capability in step 1202 may be carried by the third request message in the aforementioned embodiment.
In Step 1203: the PCF transmits, to the SMF, PCC rules of the UE, and at least part of the PCC rules of the UE can be used by other UEs than the UE.
In Step 1204: the SMF sends the indication of the first capability to a UDM/UDR. The UDM/UDR is the third network device in the foregoing embodiments. In one case, the SMF may be the second network device serving the second terminal (such as the second SMF in the foregoing embodiments), and the indication of the first capability in step 1204 may be carried by the fourth request message in the foregoing embodiments. In another case, the SMF may be the first network device serving the first terminal (such as the first SMF in the foregoing embodiments), and the indication of the first capability in step 1204 may be carried by the second request message in the foregoing embodiments.
In Step 1205: the UDM/UDR replies to the SMF with subscription information of the UE, where the subscription information may be MM subscription information, and all or part of the parameters of the MM subscription information may be used by other UEs.

The sequence of execution of steps 1202 to 1203 may be after steps 1204 to 1205 or before step 1204, and the sequence is not limited here. As long as the processing of steps 1202 to 1205 is completed before step 1206, it is within the scope of protection of the present example.

In Step 1206: the SMF generates an SM Context of the UE based on the subscription information of the UE, the PCC rules of the UE, the indication of the "first capability", and the local configuration; and part or all of the parameters in the SM Context of the UE have the possibility of being used by other UEs. In this step, if the UE is the first terminal, the SM Context of the UE may be the second context of the first terminal in the foregoing embodiments. If the UE is the second terminal, the SM Context of the UE may be the contexts related to the second terminal in the foregoing embodiments.

In Step 1207: the SMF sends an acknowledgement indication to the UE, and the acknowledgement indication is configured to inform the UE that the function corresponding to the "first capability" is permitted or required to be performed. In this step, if the UE is the first terminal, the acknowledgement indication may refer to the second indication information in the foregoing embodiments. If the UE is the second terminal, the acknowledgement indication may be the fourth indication information in the foregoing embodiments. It should also be understood that after completion of step 1207 or after step 1206, the SMF may further transmit at least part of parameters in the SM Context of the UE to the UE; and if the UE is the first terminal, at least part of parameters in the SM Context of the UE may be transmitted via the third information; and if the UE is the second terminal, at least part of parameters in the SM Context of the UE may be transmitted via the sixth information.

It should be noted that other network devices, such as an RAN, an AMF and a UPF, are also illustrated in FIG. 12, and the AMF and UPF are devices on the core network side, which are illustrated in FIG. 12 for the purpose of illustrating the integrity of the architecture, and the functions of the AMF and UPF are not limited here. The RAN may be an access network device serving the UE, and the role of the RAN in the example of FIG. 12 is also not limited.

In addition to the UE Context in AMF (generally referred to as MM/RM Context), the UE Context also has an important context, namely SM Context (including QoS parameters, IP addresses, etc.). Therefore, when a service is moved from UE-1 to UE-2, the context generated for UE-2 also needs to be consistent with or associated with the context previously generated for UE-1. The flow illustrated in FIG. 13 is mainly to achieve the purpose that a context generated for the UE-2 is consistent with or associated with a context previously generated for the UE-1 when a certain service is migrated from the UE-1 to the UE-2. In FIG. 13, the UE-2 is the first terminal in the above embodiments, the UE-1 is the second terminal in the above embodiments, the SMF-1 is the second network device in the above embodiments, the SMF-2 is the first network device in the above embodiments, and the UDM/UDR is the third network device in the above embodiments.

In Step 1300: UE-1 completes a PDU session establishment procedure, generates the SM context of the UE-1, and transmits data of a specific service through the PDU session.

In Step 1301: UE-2 sends, to SMF-2, a PDU session establishment/modification request message which contains one or more of the following parameters:
- "first request": The "first request" is configured to indicate that part or all of the contexts, policies, and the like information of other UEs needs to be allocated to the UE-2 for use;
- "first identifier": which includes one or more of the following: 1) an identifier of the associated UE-1: i.e., existing UE context and the like of which UE is to be allocated; 2) an identifier of an associated first service (or first application), i.e., UE context and the like corresponding to which service is to be allocated, where the identifier can be used together with the identifier of UE-1 to further define the content to be allocated, or can be used alone; 3) an identifier of an associated first user: i.e., UE context and the like corresponding to which user identifier is to be allocated; multiple UEs such as UE-1 and UE-2 can be used by a same user, and thus the user identifier can be associated with information such as contexts across multiple UEs; 4) a first PDU session ID and/or a first QoS flow ID of the UE-1: indicating the SM Context of the UE-2 needs to be generated based on the context of which PDU session and/or QoS data flow of the UE-1.

If the same SMF serves UE-1 and UE-2, e.g. SMF-2, step 1302a or step 1302b need not be performed, and step 1303 is performed directly.

If there are two different SMFs serving UE-1 and UE-2, step 1302a or step 1302b needs to be performed:
In Step 1302a, SMF-2 requests SMF-1 for an SM context (which may include a first request and/or a first identifier). Specifically, the SMF-2 acquires the SM Context allocated to the UE-1 by transmitting the SM Context request to the SMF-1.
In Step 1302b, the SMF-2 requests the UDM/UDR for an SM context (which may include a first request and/or a first identifier). The SMF-2 acquires the SM Context allocated to the UE-1 by sending the SM Context request to the UDM/UDR.
In Step 1303: the SMF-2 generates the SM Context of the UE-2 based on the acquired SM Context parameter of the UE-1, the subscription information of the UE-2 itself and/or the local configuration. Here, the SM Context parameter of the UE-2 may be completely or partially the same as that of the UE-1, or may be modified. This is because the parameters such as resolution and code rate of different UEs are different, and some parameters such as QOS may be adjusted accordingly instead of being directly copied.
In Steps 1304-1307: SMF-2 interacts with other core network elements (such as UPF), RAN, and UE-2 based on the SM Context of UE-2 to complete the PDU session establishment/modification.

For example, in step 1304, the SMF-2 sends an N4 session establishment/modification request to the UPF, and then starts performing other existing session establishment steps. In step 1305, the SMF-2 transmits an N1, N2 interface communication message transfer message (Namf_Communiaction_N1N2Message Transfer) to an AMF (for example, AMF-2 serving the UE-2). In step 1306, the AMF sends a request for allocation of a PDU session resource (N2 PDU Session Request) (NAS message) to the RAN. In step 1307, an AN-related resource is established (that is, the RAN and the UE-2 perform related resource establishment), while the RAN transmits a downlink PDU session establishment reply message including the SM Context (Context) on the UE-2 side.

In Step 1308: for part of SM Context parameters (e.g. IP address) of UE-1, if allocated to UE-2, the parameters corresponding to the PDU session of UE-1 need to be released. This is because part or all of the SM Contexts of UE-1 have been generated for UE-2, so the corresponding parameters need to be modified or deleted for the PDU session of UE-1. This step may be optional.

By adopting the scheme provided by the present embodiment, the first terminal may request allocation of a context related to at least part of contexts of the second terminal by transmitting the first information. In this way, by allocating the contexts related to the second terminal to the first terminal, it enables the migration of at least part of the services of the second terminal to different devices, thereby achieving the effect of collaborating on a same service across multiple devices, while ensuring service continuity during the service migration.

Further, the solution provided by the present embodiment can be enhanced in the existing registration/session flow to realize migration or copying of at least part of contexts of the second terminal to the first terminal and its network-side device for use; in the present embodiment, migration or copying of contexts may be realized by indicating a first identifier, such as a first service identifier, a first user identifier, or an association relationship between terminals.

FIG. 14 is a schematic diagram of a composition and structure of a first terminal according to an embodiment of the present disclosure, including:
The first communication unit 1401 is configured to transmit first information, the first information being configured to request allocation of a first context of the first terminal, the first context of the first terminal being related to at least part of contexts of the second terminal.

The first context of the first terminal includes at least one of: a first part of parameters in the contexts related to the second terminal; related parameters of a second part of parameters in the contexts related to the second terminal.

The contexts related to the second terminal includes at least one of the following: a context corresponding to the second terminal; a context corresponding to a first service run by the second terminal; a context corresponding to a first user using the second terminal; a context corresponding to a first protocol data unit (PDU) session of the second terminal; and a context corresponding to a first quality of service (QoS) flow of the second terminal.

The first information includes a first identifier, the first identifier including at least one of an identifier of the second terminal, an identifier of the first service, an identifier of the first user, an identifier of the first PDU session, and an identifier of the first QoS flow.

The first communication unit is configured to receive second information, the second information including at least part of parameters of the first context of the first terminal.

The first information is carried by at least one of: a registration request message, a registration update message, a session establishment request message, and a session modification request message.

The first communication unit is configured to transmit first indication information, the first indication information being configured to indicate that the first terminal has a first capability, and the first capability including at least one of: a capability to support or allow allocation of a context related to at least part of contexts of the first terminal to one or more other terminals, and a capability to support or allow allocation of a context related to at least part of contexts of one or more other terminals to the first terminal.

The first indication information is further configured to indicate at least one of the following: the first terminal requesting implementation of a function corresponding to the first capability; the first terminal requiring implementation of a function corresponding to the first capability; the first terminal supports implementation of a function corresponding to the first capability; the first terminal agreeing to implementation of a function corresponding to the first capability; and the first terminal requesting permission to implement the function corresponding to the first capability with one or more other terminals.

The first indication information includes an identifier(s) of the one or more other terminals, and the second terminal is included among the one or more other terminals.

The first communication unit is configured to receive second indication information, the second indication information being configured to indicate one of: supporting the first terminal to implement the function corresponding to the first capability and requiring the first terminal to implement the function corresponding to the first capability.

The first communication unit is configured to receive third information, the third information including at least part of parameters of a second context of the first terminal, the second context of the first terminal including at least part of contexts capable of being allocated to one or more other terminals.

The first indication information is carried by one of a registration request message, a registration update message, a session establishment request message, and a session modification request message.

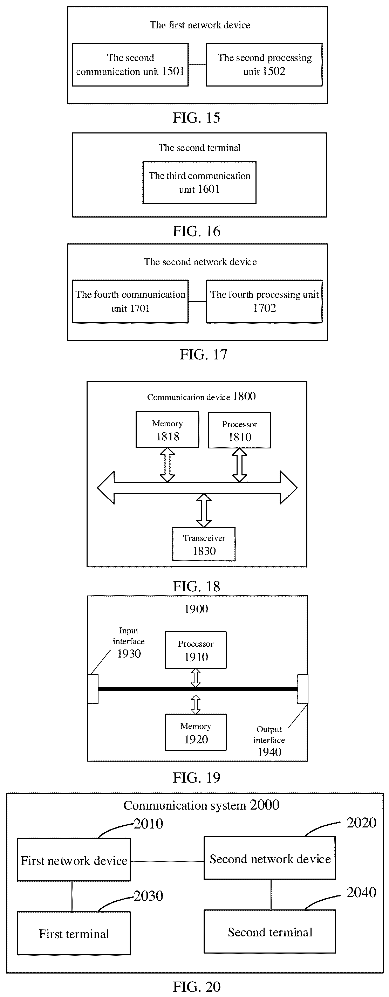

FIG. 15 is a schematic diagram of a composition structure of a first network device according to an embodiment of the present disclosure, including:
The second communication unit 1501 is configured to receive first information, the first information being configured to request allocation of a first context of a first terminal, the first context of the first terminal being related to at least part of contexts of the second terminal.

The first context of the first terminal includes at least one of: a first part of parameters in the contexts related to the second terminal; and related parameters of a second part of parameters in the contexts related to the second terminal.

The contexts related to the second terminal include at least one of the following: a context corresponding to the second terminal; a context corresponding to a first service run by the second terminal; a context corresponding to a first user using the second terminal; a context corresponding to a first protocol data unit (PDU) session of the second terminal; and a context corresponding to a first quality of service (QoS) flow of the second terminal.

The first information includes a first identifier.

As shown in FIG. 15, the first network device further includes a second processing unit 1502.

The second processing unit 1502 is configured to generate a first context of the first terminal based on the contexts related to the second terminal.

The second communication unit is configured to acquire the contexts related to the second terminal.

The first network device serves the first terminal and the second terminal.

The second communication unit is configured to perform one of following operations: sending fourth information to a second network device and receiving the contexts related to the second terminal from the second network device, the fourth information being configured to request acquisition of the contexts related to the second terminal; and sending fifth information to a third network device and receiving the contexts related to the second terminal from the third network device, the fifth information being configured to request acquisition of the contexts related to the second terminal.

The fourth information includes a first identifier, and/or the fifth information includes a first identifier.

The first identifier includes at least one of: an identifier of the second terminal, an identifier of a first service, an identifier of a first user, an identifier of a first PDU session, and an identifier of a first QoS flow.

The first network device serves the first terminal; the second network device serves the second terminal; and the third network device is configured to store the contexts related to the second terminal.

The second communication unit is configured to send second information, the second information including at least part of parameters of the first context of the first terminal.

The first information is carried by at least one of a registration request message, a registration update message, a session establishment request message, and a session modification request message.

The second communication unit is configured to receive first indication information, the first indication information being configured to indicate that the first terminal has a first capability, and the first capability including at least one of: a capability to support or allow allocation of a context related to at least part of contexts of the first terminal to one or more other terminals, and a capability to support or allow allocation of a context related to at least part of contexts of one or more other terminals to the first terminal.

The first indication information is further configured to indicate at least one of the following: the first terminal requesting implementation of a function corresponding to the first capability; the first terminal requiring implementation of a function corresponding to the first capability; the first terminal supports implementation of a function corresponding to the first capability; the first terminal agreeing to implementation of a function corresponding to the first capability; and the first terminal requesting permission to implement the function corresponding to the first capability with one or more other terminals.

The first indication information includes an identifier of each of the one or more other terminals, and the one or more other terminals include the second terminal.

The second communication unit is configured to send second indication information, the second indication information being configured to indicate one of: supporting the first terminal to implement the function corresponding to the first capability and requiring the first terminal to implement the function corresponding to the first capability.

The second communication unit is configured to acquire, from a third network device, subscription information of the first terminal, the subscription information of the first terminal including at least part of the subscription information capable of being used by one or more other terminals.

The second processing unit is configured to generate a second context of the first terminal based on the subscription information of the first terminal, the second context of the first terminal including at least part of the contexts capable of being allocated to one or more other terminals.

The second communication unit is configured to acquire, from a fourth network device, policy and charging control (PCC) rules of the first terminal, the PCC rules of the first terminal including at least part of the PCC rules capable of being used by one or more other terminals.

The second processing unit is configured to generate the second context of the first terminal based on the subscription information of the first terminal and the PCC rules of the first terminal.

The second communication unit is configured to send third information, the third information including at least part of parameters of the second context of the first terminal.

The fourth network device includes a policy control function (PCF).

The first indication information is carried by one of a registration request message, a registration update message, a session establishment request message, and a session modification request message.

The third network device includes at least one of a unified data management function (UDM), and a unified data warehouse function (UDR).

The first network device includes a first access and mobility management function (AMF) and the second network device includes a second AMF; alternatively, the first network device includes a first session management function (SMF) and the second network device includes a second SMF.

FIG. 16 is a schematic diagram of a composition structure of a second terminal according to an embodiment of the present disclosure, including:
The third communication unit 1601 is configured to send third indication information, the third indication information being configured to indicate that the second terminal has a first capability, and the first capability includes at least one of: a capability to support or allow allocation of a context related to at least part of contexts of the second terminal to one or more other terminals, and a capability to support or allow allocation of a context related to at least part of contexts of one or more other terminals to the second terminal.

The third indication information is further configured to indicate at least one of the following: the second terminal requesting implementation of a function corresponding to the first capability; the second terminal requiring implementation of a function corresponding to the first capability; the second terminal supporting implementation of a function corresponding to the first capability; the second terminal agreeing to implementation of a function corresponding to the first capability; and the second terminal requesting permission to implement the function corresponding to the first capability with one or more other terminals.

The third indication information includes an identifier(s) of the one or more other terminals.

The third communication unit is configured to receive fourth indication information, the fourth indication information being configured to indicate one of: supporting the second terminal to implement the function corresponding to the first capability, and requiring the second terminal to implement the function corresponding to the first capability.

The third communication unit is configured to receive sixth information, the sixth information including at least part of parameters of contexts related to the second terminal, the contexts related to the second terminal including at least part of contexts capable of being allocated to one or more other terminals.

The third indication information is carried by one of a registration request message, a registration update message, a session establishment request message, and a session modification request message.

FIG. 17 is a schematic diagram of a composition structure of a second network device according to an embodiment of the present disclosure, including following elements.

A fourth communication unit 1701 is configured to receive third indication information, the third indication information being configured to indicate that a second terminal has a first capability, and the first capability including at least one of: a capability to support or allow allocation of a context related to at least part of contexts of the second terminal to one or more other terminals, and a capability to support or allow allocation of a context related to at least part of contexts of one or more other terminals to the second terminal.

The third indication information is further configured to indicate at least one of the following: the second terminal requesting implementation of a function corresponding to the first capability; the second terminal requiring implementation of a function corresponding to the first capability; the second terminal supporting implementation of a function corresponding to the first capability; the second terminal agreeing to implementation of a function corresponding to the first capability; and the second terminal requesting permission to implement the function corresponding to the first capability with one or more other terminals.

The third indication information includes an identifier of each of the one or more other terminals.

The fourth communication unit is configured to send fourth indication information, the fourth indication information being configured to indicate one of: supporting the second terminal to implement the function corresponding to the first capability and requiring the second terminal to implement the function corresponding to the first capability.

As shown in FIG. 17, the second network device further includes a fourth processing unit 1702:
The fourth processing unit 1702 is configured to generate contexts related to the second terminal based on subscription information of the second terminal, the contexts related to the second terminal including at least part of contexts capable of being allocated to one or more other terminals.

The fourth communication unit is configured to acquire, from the third network device, subscription information of the second terminal, the subscription information of the second terminal including at least part of subscription information capable of being used by one or more other terminals.

The fourth communication unit is configured to acquire, from a fourth network device, policy and charging control (PCC) rules of the second terminal, the PCC rules of the second terminal including at least part of the PCC rules capable of being used by one or more other terminals.

The fourth processing unit is configured to generate the contexts related to the second terminal based on the subscription information of the second terminal and the PCC rules of the second terminal.

The fourth communication unit is configured to send sixth information, the sixth information including at least part of parameters of the contexts related to the second terminal.

The third indication information is carried by one of a registration request message, a registration update message, a session establishment request message, and a session modification request message.

The second network device includes a second access and mobility management function (AMF) or a second session management function (SMF).

The devices according to the embodiments of the present disclosure can realize the corresponding functions of each device in the above-described communication method embodiments. The flow, function, implementation, and beneficial effect corresponding to each module (sub-module, unit, component, etc.) in the first terminal device, the first network device, the second terminal, or the second network device can be described in the corresponding description in the above-described method embodiments, and will not be repeatedly described herein. The functions described with respect to each module (sub-module, unit, component, etc.) in the first terminal device, the first network device, the second terminal, or the second network device according to the embodiment of the application may be implemented by different modules (sub-modules, units, components, etc.), or may be implemented by the same module (sub-module, unit, component, etc.).

FIG. 18 is a schematic structural diagram of a communication device 1800 according to an embodiment of the present disclosure. The communication device 1800 includes a processor 1810 that can call and run a computer program from a memory to cause the communication device 1800 to implement the methods in the embodiments of the present disclosure. In a possible implementation, the communication device 1800 may further include a memory 1820. Here, the processor 1810 may call and run a computer program from the memory 1820 to cause the communication device 1800 to implement the methods in the embodiments of the present disclosure. The memory 1820 may be a separate device independent of the processor 1810 or may be integrated in the processor 1810. In a possible implementation, the communication device 1800 may further include a transceiver 1830 that the processor 1810 may control to communicate with other devices, and in particular, may transmit information or data to or receive information or data transmitted by other devices. Among them, transceiver 1830 may include a transmitter and a receiver. The transceiver 1830 may further include antennas, and the number of antennas may be one or more.

In a possible implementation, the communication device 1800 may be a first terminal device, a first network device, a second terminal, or a second network device according to the embodiments of the present disclosure, and the communication device 1800 may implement corresponding procedures implemented by the first terminal device, the first network device, the second terminal, or the second network device in each method according to the embodiments of the present disclosure, and will not be described herein for the sake of brevity.

FIG. 19 is a schematic structural diagram of a chip 1900 according to an embodiment of the present disclosure. The chip 1900 includes a processor 1910, which can call and run a computer program from a memory to implement the methods in the embodiments of the present disclosure. In a possible implementation, the chip 1900 may further include a memory 1920. Among them, the processor 1910 may call and run a computer program from the memory 1920 to implement methods executed by the first device or the target second device in the embodiments of the present disclosure. The memory 1920 may be a separate device independent of the processor 1910 or may be integrated in the processor 1910. In a possible implementation, the chip 1900 may further include an input interface 1930. The processor 1910 may control the input interface 1930 to communicate with other devices or chips, and specifically, may acquire information or data from other devices or chips. In a possible implementation, the chip 1900 may further include an output interface 1940. Among them, the processor 1910 may control the output interface 1940 to communicate with other devices or chips, and specifically, may output information or data to other devices or chips.

In a possible implementation, the chip can be applied to the first terminal device, the first network device, the second terminal, or the second network device in the embodiments of the present disclosure, and the chip can implement corresponding processes implemented by the first terminal device, the first network device, the second terminal, or the second network device in each method of the embodiments of the present disclosure, and will not be repeatedly described here for the sake of brevity. It should be understood that the chip mentioned in the embodiments of the present disclosure may also be referred to as a system-level chip, or a system chip, or a chip system, or a on-chip system chip, and the like. The processor mentioned above may be a general-purpose processor, a digital signal processor (DSP), a field programmable gate array (FPGA), an application specific integrated circuit (ASIC) or other programmable logic device, a transistor logic device, a discrete hardware component, or the like. Among them, the general-purpose processor mentioned above may be a microprocessor or any conventional processor or the like. The memory mentioned above may be a volatile memory or a non-volatile memory, or may include both volatile and non-volatile memory. The non-volatile memory may be a read-only memory (ROM), a programmable read-only memory (PROM), an erasable PROM (EPROM), an electrically erasable programmable read-only memory (EEPROM), or a flash memory. The volatile memory may be a random access memory (RAM). It should be understood that the above memory is illustrative but not limiting, for example, the memory in the embodiments of the present disclosure may also be a static random access memory (SRAM), a dynamic random access memory (DRAM), a synchronous dynamic random access memory (SDRAM), a double data rate synchronous dynamic random access memory (DDR SDRAM), an enhanced SDRAM (ESDRAM), a synch link dynamic random access memory (SLDRAM), a Direct Rambus RAM (DR RAM), and the like. That is, the memory in the embodiments of the present disclosure is intended to include, but is not limited to, these and any other suitable type of memory.

FIG. 20 is a schematic block diagram of a communication system 2000 according to an embodiment of the present disclosure. The communication system 2000 includes a first terminal 2030, a first network device 2010, a second terminal 2040, and a second network device 2020. The first terminal 2030 may be configured to implement corresponding functions implemented by the first terminal in the above-described methods. The first network device 2010 may be configured to implement the respective functions implemented by the first network device in the methods described above. The second terminal 2040 may be configured to implement corresponding functions implemented by the second terminal in the above-described methods. The second network device 2020 may be configured to implement the respective functions implemented by the second network device in the above-described methods. For the sake of brevity, it will not be repeated here.

The embodiments described above may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, the processes or functions according to the embodiments of the present disclosure are generated in whole or in part. The computer may be a general purpose computer, a special purpose computer, a computer network, or other programmable device. The computer instructions may be stored in a computer-readable storage medium or transmitted from one computer-readable storage medium to another computer-readable storage medium, for example, the computer instructions may be transmitted from one website site, computer, server, or data center by wired (e.g., coaxial cable, optical fiber, Digital Subscriber Line (DSL)) or wireless (e.g., infrared, wireless, microwave, etc.) means to another website site, computer, server, or data center. The computer-readable storage medium may be any available medium accessible by a computer or a data storage device such as a server, a data center, or the like that contains one or more available media integrations. The available medium may be a magnetic medium (e.g., a floppy disk, a hard disk, a magnetic tape), an optical medium (e.g., a DVD), or a semiconductor medium (e.g., a Solid State Disk (SSD)), etc.

It should be understood that in various embodiments of the present disclosure, the sequence numbers of the above-described processes do not mean the sequence of execution, and the sequence of execution of each process should be determined by its function and inherent logic, and should not constitute any limitation on the implementation of the embodiments of the present disclosure. Those skilled in the art can clearly understand that for convenience and conciseness of the description, the specific working processes of the systems, devices, and units described above may refer to the corresponding processes in the aforementioned method embodiments, and will not be repeatedly described herein. The above is merely a specific embodiment of the present disclosure, but the scope of protection of the present disclosure is not limited thereto, and any person skilled in the art can easily think of changes or substitutions within the technical scope disclosed in the present disclosure, and should be covered within the scope of protection of the present disclosure. Therefore, the scope of protection of this application should be based on the scope of protection of this claim.

## Claims

1. A communication method, comprising:
sending, by a first terminal, first information, wherein the first information is configured to request allocation of a first context of the first terminal, and the first context of the first terminal is related to at least part of contexts of a second terminal.

2. The communication method according to claim 1, wherein the first context of the first terminal comprises at least one of: a first part of parameters in the contexts related to the second terminal; and related parameters of a second part of parameters in the contexts related to the second terminal.

3. The communication method according to claim 2, wherein the contexts related to the second terminal comprise at least one of: a context corresponding to the second terminal; a context corresponding to a first service run by the second terminal; a context corresponding to a first user using the second terminal; a context corresponding to a first protocol data unit (PDU) session of the second terminal; and a context corresponding to a first quality of service (QoS) flow of the second terminal.

4. The communication method according to any one of claims 1 to 3, wherein the first information comprises a first identifier, the first identifier comprising at least one of: an identifier of the second terminal, an identifier of a first service, an identifier of a first user, an identifier of a first PDU session, and an identifier of a first QoS flow.

5. The communication method according to any one of claims 1 to 4, after the first terminal sending the first information, the method further comprising:
receiving, by the first terminal, second information, wherein the second information comprises at least part of parameters of the first context of the first terminal.

6. The communication method according to any one of claims 1 to 5, wherein the first information is carried by at least one of: a registration request message, a registration update message, a session establishment request message, and a session modification request message.

7. The communication method according to any one of claims 1 to 6, further comprising:
sending, by the first terminal, first indication information, wherein the first indication information is configured to indicate that the first terminal has a first capability, and the first capability comprises at least one of: a capability to support or allow allocation of a context related to at least part of contexts of the first terminal to one or more other terminals, and a capability to support or allow allocation of a context related to at least part of contexts of one or more other terminals to the first terminal.

8. The communication method according to claim 7, wherein the first indication information is further configured to indicate at least one of followings: the first terminal requesting implementation of a function corresponding to the first capability; the first terminal requiring implementation of the function corresponding to the first capability; the first terminal supporting implementation of the function corresponding to the first capability; the first terminal agreeing to implementation of the function corresponding to the first capability; and the first terminal requesting permission to implement the function corresponding to the first capability with one or more other terminals.

9. The communication method according to claim 7 or 8, wherein the first indication information comprises an identifier(s) of the one or more other terminals, and the one or more other terminals comprise the second terminal.

10. The communication method according to any one of claims 7 to 9, after the first terminal sends the first indication information, the method further comprising:
receiving, by the first terminal, second indication information, wherein the second indication information is configured to indicate one of: supporting the first terminal to implement the function corresponding to the first capability, and requiring the first terminal to implement the function corresponding to the first capability.

11. The communication method according to any one of claims 7 to 10, after the first terminal sends the first indication information, the method further comprising:
receiving, by the first terminal, third information, wherein the third information comprises at least part of parameters of a second context of the first terminal, and the second context of the first terminal comprises at least part of contexts capable of being allocated to one or more other terminals.

12. The communication method according to any one of claims 7 to 11, wherein the first indication information is carried by one of: a registration request message, a registration update message, a session establishment request message, and a session modification request message.

13. A communication method, comprising:
receiving, by a first network device, first information, wherein the first information is configured to request allocation of a first context of a first terminal, and the first context of the first terminal is related to at least part of contexts of a second terminal.

14. The communication method according to claim 13, wherein the first context of the first terminal comprises at least one of: a first part of parameters in the contexts related to the second terminal; and related parameters of a second part of parameters in the contexts related to the second terminal.

15. The communication method according to claim 14, wherein the contexts related to the second terminal comprise at least one of: a context corresponding to the second terminal; a context corresponding to a first service run by the second terminal; a context corresponding to a first user using the second terminal; a context corresponding to a first protocol data unit (PDU) session of the second terminal; and a context corresponding to a first quality of service (QoS) flow of the second terminal.

16. The communication method according to any one of claims 13 to 15, wherein the first information comprises a first identifier.

17. The communication method according to any one of claims 13 to 16, after the first network device receives the first information, the method further comprising:
acquiring, by the first network device, the contexts related to the second terminal; and
generating, by the first network device, the first context of the first terminal based on the contexts related to the second terminal.

18. The communication method according to claim 17, wherein the first network device serves the first terminal and the second terminal.

19. The communication method according to claim 17, wherein acquiring, by the first network device, the contexts related to the second terminal comprises one of:
sending, by the first network device, fourth information to a second network device, and receiving, by the first network device, the contexts related to the second terminal from the second network device, wherein the fourth information is configured to request acquisition of the contexts related to the second terminal; and
sending, by the first network device, fifth information to a third network device, and receiving, by the first network device, the contexts related to the second terminal from the third network device, wherein the fifth information is configured to request acquisition of the contexts related to the second terminal.

20. The communication method according to claim 19, wherein the fourth information comprises a first identifier, and/or the fifth information comprises a first identifier.

21. The communication method according to claim 16 or 20, wherein the first identifier comprises at least one of: an identifier of the second terminal, an identifier of a first service, an identifier of a first user, an identifier of a first PDU session, and an identifier of a first QoS flow.

22. The communication method according to claim 19 or 20, wherein the first network device serves the first terminal; the second network device serves the second terminal; and the third network device is configured to store the contexts related to the second terminal.

23. The communication method according to any one of claims 13 to 22, after the first network device receives the first information, the method further comprising:
sending, by the first network device, second information, wherein the second information comprises at least part of parameters of the first context of the first terminal.

24. The communication method according to any one of claims 13 to 23, wherein the first information is carried by at least one of: a registration request message, a registration update message, a session establishment request message, and a session modification request message.

25. The communication method according to any one of claims 13 to 24, further comprising:
receiving, by the first network device, first indication information, wherein the first indication information is configured to indicate that the first terminal has a first capability, and the first capability comprises at least one of: a capability to support or allow allocation of a context related to at least part of contexts of the first terminal to one or more other terminals, and a capability to support or allow allocation of a context related to at least part of contexts of one or more other terminals to the first terminal.

26. The communication method according to claim 25, wherein the first indication information is further configured to indicate at least one of followings: the first terminal requesting implementation of a function corresponding to the first capability; the first terminal requiring implementation of the function corresponding to the first capability; the first terminal supporting implementation of the function corresponding to the first capability; the first terminal agreeing to implementation of the function corresponding to the first capability; and the first terminal requesting permission to implement the function corresponding to the first capability with one or more other terminals.

27. The communication method according to claim 25 or 26, wherein the first indication information comprises an identifier of each of the one or more other terminals, and the one or more other terminals comprise the second terminal.

28. The communication method according to any one of claims 25 to 27, after the first network device receives the first indication information, the method further comprising:
sending, by the first network device, second indication information, wherein the second indication information is configured to indicate one of: supporting the first terminal to implement the function corresponding to the first capability, and requiring the first terminal to implement the function corresponding to the first capability.

29. The communication method according to any one of claims 25 to 28, after the first network device receives the first indication information, the method further comprising:
acquiring, by the first network device, subscription information of the first terminal from a third network device, wherein the subscription information of the first terminal comprises at least part of subscription information capable of being used by one or more other terminals; and
generating, by the first network device, a second context of the first terminal based on the subscription information of the first terminal, wherein the second context of the first terminal comprises at least part of contexts capable of being allocated to one or more other terminals.

30. The communication method according to claim 29, further comprising:
acquiring, by the first network device, policy and charging control (PCC) rules of the first terminal from a fourth network device, wherein the PCC rules of the first terminal comprise at least part of PCC rules capable of being used by one or more other terminals,
wherein generating, by the first network device, the second context of the first terminal based on the subscription information of the first terminal comprises: generating, the first network device, the second context of the first terminal based on the subscription information of the first terminal and the PCC rules of the first terminal.

31. The communication method according to claim 29 or 30, after generating the second context of the first terminal, the method further comprising:
sending, by the first network device, third information, wherein the third information comprises at least part of parameters of the second context of the first terminal.

32. The communication method according to claim 30, wherein the fourth network device comprises: a policy control function (PCF).

33. The communication method according to any one of claims 25 to 32, wherein the first indication information is carried by one of: a registration request message, a registration update message, a session establishment request message, and a session modification request message.

34. The communication method according to any one of claims 19 to 22 and 29, wherein the third network device comprises at least one of: a unified data management function (UDM), and a unified data repository function (UDR).

35. The communication method according to any one of claims 19 to 22, wherein
the first network device comprises a first access and mobility management function (AMF), and the second network device comprises a second AMF; or
the first network device comprises a first session management function (SMF), and the second network device comprises a second SMF.

36. A communication method, comprising:
sending, by a second terminal, third indication information, wherein the third indication information is configured to indicate that the second terminal has a first capability, and the first capability comprises at least one of: a capability to support or allow allocation of a context related to at least part of contexts of the second terminal to one or more other terminals, and a capability to support or allow allocation of a context related to at least part of contexts of one or more other terminals to the second terminal.

37. The communication method according to claim 36, wherein the third indication information is further configured to indicate at least one of followings: the second terminal requesting implementation of a function corresponding to the first capability; the second terminal requiring implementation of the function corresponding to the first capability; the second terminal supporting implementation of the function corresponding to the first capability; the second terminal agreeing to implementation of the function corresponding to the first capability; and the second terminal requesting permission to implement the function corresponding to the first capability with one or more other terminals.

38. The communication method according to claim 36 or 37, wherein the third indication information comprises an identifier(s) of the one or more other terminals.

39. The communication method according to any one of claims 36 to 38, after the second terminal sends the third indication information, the method further comprising:
receiving, by the second terminal, fourth indication information, wherein the fourth indication information is configured to indicate one of: supporting the second terminal to implement the function corresponding to the first capability, and requiring the second terminal to implement the function corresponding to the first capability.

40. The communication method according to any one of claims 36 to 39, after the second terminal sends the third indication information, the method further comprising:
receiving, by the second terminal, sixth information, wherein the sixth information comprises at least part of parameters of contexts related to the second terminal, and the contexts related to the second terminal comprise at least part of contexts capable of being allocated to one or more other terminals.

41. The communication method according to any one of claims 36 to 40, wherein the third indication information is carried by one of: a registration request message, a registration update message, a session establishment request message, and a session modification request message.

42. A communication method, comprising:
receiving, by a second network device, third indication information, wherein the third indication information is configured to indicate that a second terminal has a first capability, and the first capability comprises at least one of: a capability to support or allow allocation of a context related to at least part of contexts of the second terminal to one or more other terminals, and a capability to support or allow allocation of a context related to at least part of contexts of one or more other terminals to the second terminal.

43. The communication method according to claim 42, wherein the third indication information is further configured to indicate at least one of followings: the second terminal requesting implementation of a function corresponding to the first capability; the second terminal requiring implementation of the function corresponding to the first capability; the second terminal supporting implementation of the function corresponding to the first capability; the second terminal agreeing to implementation of the function corresponding to the first capability; and the second terminal requesting permission to implement the function corresponding to the first capability with one or more other terminals.

44. The communication method according to claim 42 or 43, wherein the third indication information comprises an identifier of each of the one or more other terminals.

45. The communication method according to any one of claims 42 to 44, after the second network device receives the third indication information, the method further comprising:
sending, by the second network device, fourth indication information, wherein the fourth indication information is configured to indicate one of: supporting the second terminal to implement the function corresponding to the first capability, and requiring the second terminal to implement the function corresponding to the first capability.

46. The communication method according to any one of claims 42 to 45, after the second network device receives the third indication information, the method further comprising:
acquiring, by the second network device, subscription information of the second terminal from a third network device, wherein the subscription information of the second terminal comprises at least part of subscription information capable of being used by one or more other terminals; and
generating, by the second network device, contexts related to the second terminal based on the subscription information of the second terminal, wherein the contexts related to the second terminal comprise at least part of contexts capable of being allocated to one or more other terminals.

47. The communication method according to claim 46, further comprising:
acquiring, by the second network device, policy and charging control (PCC) rules of the second terminal from a fourth network device, wherein the PCC rules of the second terminal comprise at least part of PCC rules capable of being used by one or more other terminals,
wherein generating, by the second network device, the contexts related to the second terminal based on the subscription information of the second terminal comprises: generating, by the second network device, the contexts related to the second terminal based on the subscription information of the second terminal and the PCC rules of the second terminal.

48. The communication method according to claim 46 or 47, after the second network device receives the third indication information, the method further comprising:
sending, by the second network device, sixth information, wherein the sixth information comprises at least part of parameters of the contexts related to the second terminal.

49. The communication method according to any one of claims 42 to 48, wherein the third indication information is carried by one of: a registration request message, a registration update message, a session establishment request message, and a session modification request message.

50. The communication method according to any one of claims 42 to 49, wherein the second network device comprises a second access and mobility management function (AMF) or a second session management function (SMF).

51. A first terminal, comprising:
a first communication unit, configured to send first information, wherein the first information is configured to request allocation of a first context of the first terminal, and the first context of the first terminal is related to at least part of contexts of a second terminal.

52. The first terminal according to claim 51, wherein the first context of the first terminal comprises at least one of: a first part of parameters in the contexts related to the second terminal; and related parameters of a second part of parameters in the contexts related to the second terminal.

53. The first terminal according to claim 52, wherein the contexts related to the second terminal comprise at least one of: a context corresponding to the second terminal; a context corresponding to a first service run by the second terminal; a context corresponding to a first user using the second terminal; a context corresponding to a first protocol data unit (PDU) session of the second terminal; and a context corresponding to a first quality of service (QoS) flow of the second terminal.

54. The first terminal according to any one of claims 51 to 53, wherein the first information comprises a first identifier, the first identifier comprising at least one of: an identifier of the second terminal, an identifier of a first service, an identifier of a first user, an identifier of a first PDU session, and an identifier of a first QoS flow.

55. The first terminal according to any one of claims 51 to 54, wherein the first communication unit is configured to receive second information, the second information comprising at least part of parameters of the first context of the first terminal.

56. The first terminal according to any one of claims 51 to 55, wherein the first information is carried by at least one of: a registration request message, a registration update message, a session establishment request message, and a session modification request message.

57. The first terminal according to any one of claims 51 to 56, wherein the first communication unit is configured to send first indication information, the first indication information being configured to indicate that the first terminal has a first capability, wherein the first capability comprises at least one of: a capability to support or allow allocation of a context related to at least part of contexts of the first terminal to one or more other terminals, and a capability to support or allow allocation of a context related to at least part of contexts of one or more other terminals to the first terminal.

58. The first terminal according to claim 57, wherein the first indication information is further configured to indicate at least one of followings: the first terminal requesting implementation of a function corresponding to the first capability; the first terminal requiring implementation of the function corresponding to the first capability; the first terminal supporting implementation of the function corresponding to the first capability; the first terminal agreeing to implementation of the function corresponding to the first capability; and the first terminal requesting permission to implement the function corresponding to the first capability with one or more other terminals.

59. The first terminal according to claim 57 or 58, wherein the first indication information comprises an identifier(s) of the one or more other terminals, and the one or more other terminals comprise the second terminal.

60. The first terminal according to any one of claims 57 to 59, wherein the first communication unit is configured to receive second indication information, wherein the second indication information is configured to indicate one of: supporting the first terminal to implement the function corresponding to the first capability, and requiring the first terminal to implement the function corresponding to the first capability.

61. The first terminal according to any one of claims 57 to 60, wherein the first communication unit is configured to receive third information, the third information comprising at least part of parameters of a second context of the first terminal, wherein the second context of the first terminal comprises at least part of contexts capable of being allocated to one or more other terminals.

62. The first terminal according to any one of claims 57 to 61, wherein the first indication information is carried by one of: a registration request message, a registration update message, a session establishment request message, and a session modification request message.

63. A first network device, comprising:
a second communication unit, configured to receive first information, wherein the first information is configured to request allocation of a first context of a first terminal, and the first context of the first terminal is related to at least part of contexts of a second terminal.

64. The first network device according to claim 63, wherein the first context of the first terminal comprises at least one of: a first part of parameters in the contexts related to the second terminal; and related parameters of a second part of parameters in the contexts related to the second terminal.

65. The first network device according to claim 64, wherein the contexts related to the second terminal comprise at least one of: a context corresponding to the second terminal; a context corresponding to a first service run by the second terminal; a context corresponding to a first user using the second terminal; a context corresponding to a first protocol data unit (PDU) session of the second terminal; and a context corresponding to a first quality of service (QoS) flow of the second terminal.

66. The first network device according to any one of claims 63 to 65, wherein the first information comprises a first identifier.

67. The first network device according to any one of claims 63 to 66, wherein the first network device further comprises a second processing unit,
wherein the second processing unit is configured to generate the first context of the first terminal based on the contexts related to the second terminal; and
the second communication unit is configured to acquire the contexts related to the second terminal.

68. The first network device according to claim 67, wherein the first network device serves the first terminal and the second terminal.

69. The first network device according to claim 67, wherein the second communication unit is configured to perform one of following operations:
sending fourth information to a second network device, and receiving the contexts related to the second terminal from the second network device, wherein the fourth information is configured to request acquisition of the contexts related to the second terminal; and
sending fifth information to a third network device, and receiving the contexts related to the second terminal from the third network device, wherein the fifth information is configured to request acquisition of the contexts related to the second terminal.

70. The first network device according to claim 69, wherein the fourth information comprises a first identifier, and/or the fifth information comprises a first identifier.

71. The first network device according to claim 66 or 70, wherein the first identifier comprises at least one of: an identifier of the second terminal, an identifier of a first service, an identifier of a first user, an identifier of a first PDU session, and an identifier of a first QoS flow.

72. The first network device according to claim 69 or 70, wherein the first network device serves the first terminal; the second network device serves the second terminal; and the third network device is configured to store the contexts related to the second terminal.

73. The first network device according to any one of claims 63 to 72, wherein the second communication unit is configured to send second information, the second information comprising at least part of parameters of the first context of the first terminal.

74. The first network device according to any one of claims 63 to 73, wherein the first information is carried by at least one of: a registration request message, a registration update message, a session establishment request message, and a session modification request message.

75. The first network device according to any one of claims 63 to 74, wherein the second communication unit is configured to receive first indication information, the first indication information being configured to indicate that the first terminal has a first capability, wherein the first capability comprises at least one of: a capability to support or allow allocation of a context related to at least part of contexts of the first terminal to one or more other terminals, and a capability to support or allow allocation of a context related to at least part of contexts of one or more other terminals to the first terminal.

76. The first network device according to claim 75, wherein the first indication information is further configured to indicate at least one of followings: the first terminal requesting implementation of a function corresponding to the first capability; the first terminal requiring implementation of the function corresponding to the first capability; the first terminal supporting implementation of the function corresponding to the first capability; the first terminal agreeing to implementation of the function corresponding to the first capability; and the first terminal requesting permission to implement the function corresponding to the first capability with one or more other terminals.

77. The first network device according to claim 75 or 76, wherein the first indication information comprises an identifier of each of the one or more other terminals, and the one or more other terminals comprise the second terminal.

78. The first network device according to any one of claims 75 to 77, wherein the second communication unit is configured to send second indication information, the second indication information being configured to indicate one of: supporting the first terminal to implement the function corresponding to the first capability, and requiring the first terminal to implement the function corresponding to the first capability.

79. The first network device according to any one of claims 75 to 78, wherein the second communication unit is configured to acquire subscription information of the first terminal from a third network device, wherein the subscription information of the first terminal comprises at least part of subscription information capable of being used by one or more other terminals; and
the second processing unit is configured to generate a second context of the first terminal based on the subscription information of the first terminal, wherein the second context of the first terminal comprises at least part of contexts capable of being allocated to one or more other terminals.

80. The first network device according to claim 79, wherein the second communication unit is configured to acquire policy and charging control (PCC) rules of the first terminal from a fourth network device, wherein the PCC rules of the first terminal comprise at least part of PCC rules capable of being used by one or more other terminals; and
the second processing unit is configured to generate the second context of the first terminal based on the subscription information of the first terminal and the PCC rules of the first terminal.

81. The first network device according to claim 79 or 80, wherein the second communication unit is configured to send third information, the third information comprising at least part of parameters of the second context of the first terminal.

82. The first network device according to claim 80, wherein the fourth network device comprises: a policy control function (PCF).

83. The first network device according to any one of claims 75 to 82, wherein the first indication information is carried by one of: a registration request message, a registration update message, a session establishment request message, and a session modification request message.

84. The first network device according to any one of claims 69 to 72 and 79, wherein the third network device comprises at least one of: a unified data management function (UDM), and a unified data repository function (UDR).

85. The first network device according to any one of claims 69 to 72, wherein
the first network device comprises a first access and mobility management function (AMF), and the second network device comprises a second AMF; or,
the first network device comprises a first session management function (SMF), and the second network device comprises a second SMF.

86. A second terminal, comprising:
a third communication unit, configured to send third indication information, wherein the third indication information is configured to indicate that the second terminal has a first capability, and the first capability comprises at least one of: a capability to support or allow allocation of a context related to at least part of contexts of the second terminal to one or more other terminals, and a capability to support or allow allocation of a context related to at least part of contexts of one or more other terminals to the second terminal.

87. The second terminal according to claim 86, wherein the third indication information is further configured to indicate at least one of followings: the second terminal requesting implementation of a function corresponding to the first capability; the second terminal requiring implementation of the function corresponding to the first capability; the second terminal supporting implementation of the function corresponding to the first capability; the second terminal agreeing to implementation of the function corresponding to the first capability; and the second terminal requesting permission to implement the function corresponding to the first capability with one or more other terminals.

88. The second terminal according to claim 86 or 87, wherein the third indication information comprises an identifier(s) of the one or more other terminals.

89. The second terminal according to any one of claims 86 to 88, wherein the third communication unit is configured to receive fourth indication information, the fourth indication information being configured to indicate one of: supporting the second terminal to implement the function corresponding to the first capability, and requiring the second terminal to implement the function corresponding to the first capability.

90. The second terminal according to any one of claims 86 to 89, wherein the third communication unit is configured to receive sixth information, the sixth information comprising at least part of parameters of contexts related to the second terminal, wherein the contexts related to the second terminal comprise at least part of contexts capable of being allocated to one or more other terminals.

91. The second terminal according to any one of claims 86 to 90, wherein the third indication information is carried by one of: a registration request message, a registration update message, a session establishment request message, and a session modification request message.

92. A second network device, comprising:
a fourth communication unit, configured to receive third indication information, wherein the third indication information is configured to indicate that a second terminal has a first capability, and the first capability comprises at least one of: a capability to support or allow allocation of a context related to at least part of contexts of the second terminal to one or more other terminals, and a capability to support or allow allocation of a context related to at least part of contexts of one or more other terminals to the second terminal.

93. The second network device according to claim 92, wherein the third indication information is further configured to indicate at least one of followings: the second terminal requesting implementation of a function corresponding to the first capability; the second terminal requiring implementation of the function corresponding to the first capability; the second terminal supporting implementation of the function corresponding to the first capability; the second terminal agreeing to implementation of the function corresponding to the first capability; and the second terminal requesting permission to implement the function corresponding to the first capability with one or more other terminals.

94. The second network device according to claim 92 or 93, wherein the third indication information comprises an identifier of each of the one or more other terminals.

95. The second network device according to any one of claims 92 to 94, wherein the fourth communication unit is configured to send fourth indication information, the fourth indication information being configured to indicate one of: supporting the second terminal to implement the function corresponding to the first capability, and requiring the second terminal to implement the function corresponding to the first capability.

96. The second network device according to any one of claims 92 to 95, wherein the second network device further comprises a fourth processing unit,
wherein the fourth processing unit is configured to generate contexts related to the second terminal based on subscription information of the second terminal, wherein the contexts related to the second terminal comprise at least part of contexts capable of being allocated to one or more other terminals; and
the fourth communication unit is configured to acquire subscription information of the second terminal from a third network device, wherein the subscription information of the second terminal comprises at least part of subscription information capable of being used by one or more other terminals.

97. The second network device according to claim 96, wherein the fourth communication unit is configured to acquire policy and charging control (PCC) rules of the second terminal from a fourth network device, wherein the PCC rules of the second terminal comprise at least part of PCC rules capable of being used by one or more other terminals; and
the fourth processing unit is configured to generate the contexts related to the second terminal based on the subscription information of the second terminal and the PCC rules of the second terminal.

98. The second network device according to claim 96 or 97, wherein the fourth communication unit is configured to send sixth information, the sixth information comprising at least part of parameters of the contexts related to the second terminal.

99. The second network device according to any one of claims 92 to 98, wherein the third indication information is carried by one of: a registration request message, a registration update message, a session establishment request message, and a session modification request message.

100. The second network device according to any one of claims 92 to 99, wherein the second network device comprises a second access and mobility management function (AMF) or a second session management function (SMF).

101. A first terminal, comprising: a transceiver, a processor, and a memory, wherein the memory is configured to store a computer program, the transceiver is configured to communicate with other devices, and the processor is configured to call and run the computer program stored in the memory to cause the first terminal to perform the method according to any one of claims 1 to 12.

102. A first network device, comprising: a transceiver, a processor, and a memory, wherein the memory is configured to store a computer program, the transceiver is configured to communicate with other devices, and the processor is configured to call and run the computer program stored in the memory to cause the first network device to perform the method according to any one of claims 13 to 35.

103. A second terminal, comprising: a transceiver, a processor, and a memory, wherein the memory is configured to store a computer program, the transceiver is configured to communicate with other devices, and the processor is configured to call and run the computer program stored in the memory to cause the second terminal to perform the method according to any one of claims 36 to 41.

104. A second network device, comprising: a transceiver, a processor, and a memory, wherein the memory is configured to store a computer program, the transceiver is configured to communicate with other devices, and the processor is configured to call and run the computer program stored in the memory to cause the second network device to perform the method according to any one of claims 42 to 50.

105. A chip, comprising: a processor, configured to call and run a computer program from a memory to cause a device equipped with the chip to perform the method according to any one of claims 1 to 12, or any one of claims 13 to 35, or any one of claims 36 to 41, or any one of claims 42 to 50.

106. A computer-readable storage medium, configured to store a computer program that, when run by the computer program, causes the device to perform the method according to any one of claims 1 to 12, or any one of claims 13 to 35, or any one of claims 36 to 41, or any one of claims 42 to 50.

107. A computer program product, comprising computer program indications, wherein the computer program indications cause a computer to perform the method according to any one of claims 1 to 12, or any one of claims 13 to 35, or any one of claims 36 to 41, or any one of claims 42 to 50.

108. A computer program, wherein the computer program causes a computer to perform the method according to any one of claims 1 to 12, or any one of claims 13 to 35, or any one of claims 36 to 41, or any one of claims 42 to 50.
